# EUROPEAN PATENT APPLICATION

(11) **EP 4 748 669 A1**
(43) Date of publication of application: **27.05.2026**
(21) Application number: 25166200.3
(22) Date of filing: 26.03.2025
(51) Int. Cl.: B60T 13/74

(54) **BRAKE SYSTEM AND METHOD OF CONTROLLING THE SAME**

(30) Priority: 20.11.2024 KR 20240165935
(71) Applicant: HL Mando Corporation, Pyeongtaek-si, Gyeonggi-do 17962 (KR)
(72) Inventor: JUNG, Youri, 17962 Pyeongtaek-si, Gyeonggi-do (KR)
(74) Representative: BCKIP Part mbB

(57) **Abstract**

A brake system may include electromechanical brakes provided in rear wheels of a vehicle, first and second force sensors configured to detect a clamping force of the electromechanical brake, an electromechanical brake controller configured to perform braking control on the electromechanical brake in response to an output signal of at least one of the first and second force sensors, one or more controllers configured to output a control signal for braking control on the electromechanical brake to the electromechanical brake controller, and first and second power supply devices configured to supply power to at least one of the one or more controllers and the electromechanical brake controller, in which the first force sensor and the second force sensor receive power from at least one of the first and second power supply devices by means of the electromechanical brake controller.

## Description

### BACKGROUND

### Field

The disclosed disclosure relates to a brake system and a method of controlling the same.

### Description of the Related Art

A vehicle is essentially equipped with a brake system for braking the vehicle. Various types of brake systems have been proposed to provide safety for a driver and a passenger.

An electromechanical brake (EMB) system is operated by a mechanical actuator and has the advantages of fast responsiveness and precise control.

An integrated dynamic brake (IDB) system serves to convert an operating force of a brake pedal into an electrical signal and control a braking force in an electrohydraulic manner. The integrated dynamic brake system is configured by integrating a master booster and an electronic stability control (ESC) device, thereby generating a stable, strong braking force.

Recently, a brake system implemented by combining an electromechanical brake and an integrated dynamic brake has been developed. Additionally, technologies are being developed to ensure redundancy of the brake system in order to improve the operational reliability and safety of the brake system.

### SUMMARY

An object achieved by the present disclosure is to provide a brake system and a method of controlling the same, the brake system having a new structure in which a hydraulic brake and an electromechanical brake are integrated to ensure redundancy.

One aspect of the present disclosure provides a brake system including: electromechanical brakes provided in rear wheels of a vehicle; first and second force sensors configured to detect a clamping force of the electromechanical brake; an electromechanical brake controller configured to perform braking control on the electromechanical brake in response to an output signal of at least one of the first and second force sensors; one or more controllers configured to output a control signal for braking control on the electromechanical brake to the electromechanical brake controller; and first and second power supply devices configured to supply power to at least one of the one or more controllers and the electromechanical brake controller, in which the first force sensor and the second force sensor receive power from at least one of the first and second power supply devices through the electromechanical brake controller.

The electromechanical brake controller may perform braking control on the electromechanical brake on the basis of a comparison between an output signal of the first force sensor and an output signal of the second force sensor.

The electromechanical brake controller may perform braking control on the electromechanical brake in response to an output signal of the first force sensor, and the electromechanical brake controller may control the electromechanical brake in response to an output signal of the second force sensor when the first force sensor is inoperable.

The electromechanical brakes may include: a first electromechanical brake provided in a first rear wheel; and a second electromechanical brake provided in a second rear wheel, and the electromechanical brake controllers may include: a first electromechanical brake controller configured to perform braking control on the first electromechanical brake; and a second electromechanical brake controller configured to perform braking control on the second electromechanical brake.

The first power supply device may supply power to the one or more controllers, the first electromechanical brake controller, and the second electromechanical brake controller, and the second power supply device may supply power to the first electromechanical brake controller and the second electromechanical brake controller.

The one or more controllers may include: a first controller configured to output a control signal for braking control on the second electromechanical brake to the second electromechanical brake controller, and a second controller configured to output a control signal for braking control on the first electromechanical brake to the first electromechanical brake controller.

The first power supply device may supply power to the first controller, the first electromechanical brake controller, and the second electromechanical brake controller, and the second power supply device may supply power to the second controller, the first electromechanical brake controller, and the second electromechanical brake.

The first power supply device may supply power to the first controller and the second electromechanical brake controller, and the second power supply device may supply power to the second controller and the first electromechanical brake controller.

The brake system may further include: a hydraulic brake provided in a front wheel of the vehicle; and a liquid pressure supply device configured to generate and supply liquid pressure to generate a braking force in the hydraulic brake, in which the one or more controllers output a control signal for braking control on the electromechanical brake to the electromechanical brake controller and output a control signal to generate and supply the liquid pressure to the liquid pressure supply device in response to an output signal of at least one of a pedal displacement sensor of a brake pedal for the vehicle and a pressure sensor configured to output a signal corresponding to information on the liquid pressure generated by the brake system.

The pedal displacement sensor and the pressure sensor may receive power from the one or more power supply devices through the one or more controllers.

The brake system may further include: an electromechanical brake provided in a front wheel of the vehicle; two force sensors configured to detect a clamping force of the electromechanical brake provided in the front wheel; and an electromechanical brake controller configured to perform braking control on the electromechanical brake provided in the front wheel in response to an output signal of at least one of two force sensors configured to detect a clamping force of the front wheel, in which the one or more controllers output a control signal for braking control on the electromechanical brake of the rear wheel to the electromechanical brake controller of the rear wheel and output a control signal for braking control on the electromechanical brake of the front wheel to the electromechanical brake controller of the front wheel in response to an output signal of at least one of a pedal displacement sensor of a brake pedal for the vehicle and a pedal force sensor of the brake pedal.

The pedal displacement sensor and the pedal force sensor may receive power from the one or more power supply devices through the one or more controllers.

Another aspect of the present disclosure provides a brake system including: a first electromechanical brake provided in a first rear wheel of a vehicle; a second electromechanical brake provided in a second rear wheel of the vehicle; a first force sensor configured to detect a clamping force of the first electromechanical brake; a second force sensor configured to detect a clamping force of the second electromechanical brake; a first electromechanical brake controller configured to perform braking control on the first electromechanical brake in response to an output signal of the first force sensor; a second electromechanical brake controller electrically connected or communication-connected to the first electromechanical brake controller and configured to perform braking control on the second electromechanical brake; a first controller configured to output a signal for braking control on the second electromechanical brake to the second electromechanical brake controller; a second controller configured to output a signal for braking control on the first electromechanical brake to the first electromechanical brake controller; and first and second power supply devices configured to supply power to at least one of the first controller, the second controller, the first electromechanical brake controller, and the second electromechanical brake controller.

The first power supply device may supply power to the first controller and the second electromechanical brake controller, and the second power supply device may supply power to the second controller and the first electromechanical brake controller.

The first force sensor may receive power from the second power supply device through the first electromechanical brake controller, and the second force sensor may receive power from the first power supply device through the second electromechanical brake controller.

The brake system may further include: a hydraulic brake provided in the front wheel of the vehicle; and a liquid pressure supply device configured to generate and supply liquid pressure to generate a braking force in the hydraulic brake, the liquid pressure supply device being electrically connected to the first controller and the second controller, in which the first controller or the second controller outputs a control signal to the liquid pressure supply device in response to an output signal of at least one of a pedal displacement sensor of a brake pedal for the vehicle and a pressure sensor configured to output a signal corresponding information on liquid pressure generated by the brake system.

The brake system may further include: an electromechanical brake provided in the front wheel of the vehicle; two force sensors configured to detect a clamping force of the electromechanical brake provided in the front wheel; and an electromechanical brake controller electrically connected or communication-connected to the first controller and the second controller and configured to perform braking control on the electromechanical brake provided in the front wheel in response to output signals of the two force sensors configured to detect the clamping force of the front wheel, in which the first controller or the second controller outputs a signal for braking control on the electromechanical brake of the front wheel to the electromechanical brake controller of the front wheel.

Still another aspect of the disclosed disclosure provides a method of controlling a brake system, which includes electromechanical brakes provided in rear wheels of a vehicle, and first and second force sensors configured to receive power from at least one of first and second power supply devices through an electromechanical brake controller of the electromechanical brake and detect a clamping force in accordance with an operation of the electromechanical brake, the method including: operating the electromechanical brake based on the reception of an output signal from a pedal displacement sensor of a brake pedal for the vehicle; and controlling a braking force of the electromechanical brake based on the reception of an output signal of at least one of the first and second force sensors in accordance with the operation of the electromechanical brake.

The electromechanical brakes may include: a first electromechanical brake provided in a first rear wheel; and a second electromechanical brake provided in a second rear wheel and the operating of the electromechanical brake may include: operating the second electromechanical brake in response to a control signal of a first controller that receives power from the first power supply device; and operating the first electromechanical brake in response to a control signal of a second controller that receives power from the second power supply device.

The method of controlling a brake system may further include: operating the first electromechanical brake and the second electromechanical brake in response to the control signal of the second controller when the first controller or the first power supply device fails; and operating the first electromechanical brake and the second electromechanical brake in response to the control signal of the first controller when the second controller or the second power supply device fails.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram illustrating a brake system according to an embodiment;
FIG. 2 is a view illustrating a configuration of the brake system according to the embodiment;
FIG. 3 is a view illustrating the configuration of the brake system according to the embodiment;
FIG. 4 is a view illustrating the configuration of the brake system according to the embodiment;
FIG. 5 is a view illustrating the configuration of the brake system according to the embodiment;
FIG. 6 is a view illustrating the configuration of the brake system according to the embodiment;
FIG. 7 is a view illustrating the configuration of the brake system according to the embodiment;
FIG. 8 is a view illustrating the configuration of the brake system according to the embodiment;
FIG. 9 is a view illustrating the configuration of the brake system according to the embodiment; and
FIG. 10 is a flowchart of an operation of controlling the brake system according to the embodiment.

### DETAILED DESCRIPTION OF EMBODIMENTS

Like reference numerals refer to like components throughout the specification. This specification does not describe all the components of the embodiments, and duplicative contents between embodiments or general contents in the technical field of the present disclosure will be omitted. The terms 'part,' 'module,' 'member,' and 'block' used in this specification may be embodied as software or hardware, and it is also possible for a plurality of 'parts,' 'modules,' 'members,' and 'blocks' to be embodied as one component, or one 'part,' 'module,' 'member,' and 'block' to include a plurality of components according to embodiments.

Throughout the specification, when a part is referred to as being 'connected' to another part, it includes not only a direct connection but also an indirect connection, and the indirect connection includes connecting through a wireless network.

Also, when it is described that a part 'includes' a component, it means that the part may further include other components, not excluding the other components unless specifically stated otherwise.

Throughout the specification, when a member is described as being 'on' another member, this includes not only a case in which the member is in contact with the other member but also a case in which another member is present between the two members.

The terms first, second, etc. are used to distinguish one component from another component, and the components are not limited by the above-mentioned terms.

The singular forms 'a,' 'an,' and 'the' include plural referents unless the context clearly dictates otherwise.

In each operation, an identification numeral is used for convenience of explanation, the identification numeral does not describe the order of the operations, and each operation may be performed differently from the order specified unless the context clearly states a particular order.

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

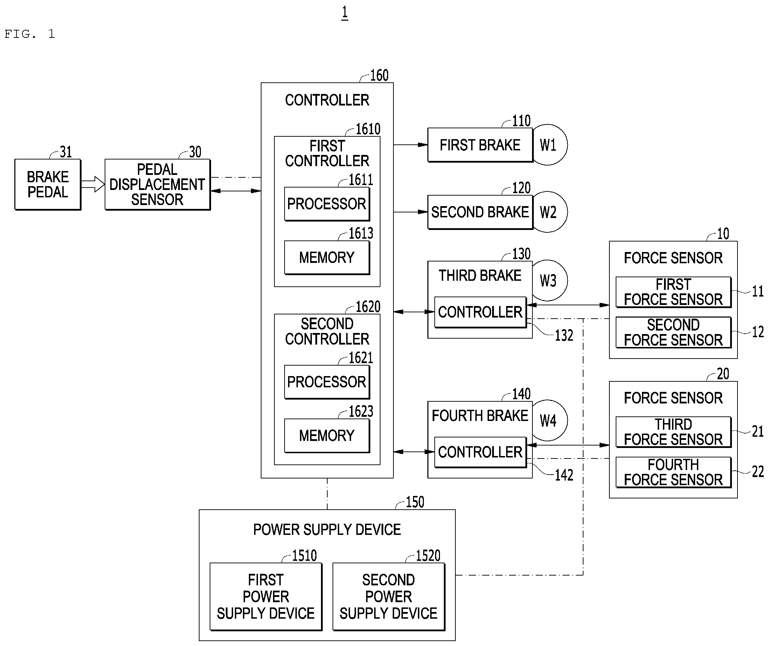

FIG. 1 is a block diagram illustrating a brake system according to an embodiment.

With reference to FIG. 1, a brake system 1 may include brakes 110, 120, 130, and 140 respectively provided in wheels w1, w2, w3, and w4 of a vehicle and configured to stop rotations of the wheels w1, w2, w3, and w4, one or more power supply devices 150 configured to supply power to the brake system 1, and a controller 160 configured to control the brake system 1.

The brakes 110, 120, 130, and 140 may include a first brake 110 configured to brake or release a first wheel w1, a second brake 120 configured to brake or release a second wheel w2, a third brake 130 configured to brake or release a third wheel w3, and a fourth brake 140 configured to brake or release a fourth wheel w4.

For example, the first wheel w1 and the second wheel w2 may be front wheels, and the third wheel w3 and the fourth wheel w4 may be rear wheels.

The first brake 110 and the second brake 120 may be provided as hydraulic brakes configured to be operated by liquid pressure. Therefore, the brake system 1 may further include a liquid pressure supply device (not illustrated).

For example, the liquid pressure supply device may include a reservoir configured to store a pressing medium, a master cylinder configured to provide a driver with a reaction force corresponding to a pedal effort of a brake pedal 31 and pressurize and discharge the pressing medium such as brake oil accommodated therein, a liquid pressure supply unit configured to generate liquid pressure of the pressing medium by means of a mechanical operation by receiving the driver's braking intention as an electrical signal from a pedal displacement sensor 30 configured to detect a displacement of the brake pedal 31, a hydraulic control unit configured to control the liquid pressure provided from the liquid pressure supply unit, a hydraulic pressure circuit having wheel cylinders configured to brake the first and second wheels w1 and w2 by receiving the liquid pressure of the pressing medium, a connection flow path configured to hydraulically connect the master cylinder and the hydraulic pressure circuit, a dump control unit provided between the liquid pressure supply unit and the reservoir and configured to control a flow of the pressing medium, a reservoir flow path configured to hydraulically connect the reservoir and the master cylinder, and/or an inspection flow path connected to a master chamber of master cylinder.

The liquid pressure supply device may generate the liquid pressure in response to an output signal of the pedal displacement sensor 30 and provide the generated liquid pressure to the wheel cylinders of the first and second wheels w1 and w2 through a transmission flow path, such that braking forces may be generated in the first wheel w1 and the second wheel w2 depending on internal pressure of the wheel cylinders.

Alternatively, the first brake 110 and the second brake 120 may be provided as electromechanical brakes (EMBs) configured to be operated by an electromechanical force, i.e., configured to generate a braking force by generating a clamping force by means of a motor and a mechanical part in order to brake the corresponding wheels. The first brake 110 may include a controller (not illustrated) for controlling the first brake 110, and the second brake 120 may include a controller (not illustrated) for controlling the second brake 120. Additionally, one or more force sensors may be provided in each of the first and second brakes 110 and 120 to detect a clamping force of the corresponding brake.

The controller for controlling each of the first and second brakes 110 and 120 may include a drive circuit for a motor. In response to the control signal from the controller 160, the drive circuit may operate the motor to generate a braking force in the corresponding wheel or eliminate the braking force.

For example, the electromechanical brake may be a caliper brake or a drum brake.

The caliper brake may include a pair of pad plates installed to press a brake disc configured to rotate together with each of the wheels w1 and w2, a caliper housing configured to operate the pair of pad plates, a piston installed in the caliper housing and configured to advance or retract, a power conversion unit configured to receive rotational driving power for moving a piston, convert the rotational driving power into linear driving power, and transmit the linear driving power to the piston, and/or a brake motor configured to generate the rotational driving power for moving the piston.

The drum brake may include a pair of brake shoes each having an arc shape and installed to be movable along a surface of a backing plate coupled to a vehicle body, a drum having a friction surface at an inner peripheral side thereof and configured to rotate together with the corresponding wheel of the vehicle, and/or an electric actuator configured to apply a force to the brake shoes in a direction in which the pair of brake shoes are expanded. The electric actuator may include a motor, a speed reducer, and/or a pressing mechanism.

The third brake 130 and the fourth brake 140 may each be provided as an electromechanical brake. The third brake 130 may be referred to as a first electromechanical brake, and the fourth brake 140 may be referred to as a second electromechanical brake.

The third brake 130 may include a controller 132 configured to control the third brake 130, and the fourth brake 140 may include a controller 142 configured to control the fourth brake 140. The controller 132 may be referred to as a first electromechanical brake controller, and the controller 142 may be referred to as a second electromechanical brake controller.

One or more force sensors 10 may be provided in the third brake 130, and one or more force sensors 20 may be provided in the fourth brake 140.

The one or more force sensors 10 may include a first force sensor 11 and/or a second force sensor 12.

The one or more force sensors 20 may include a third force sensor 21 and a fourth force sensor 22.

The controllers 132 and 142 of the third and fourth brakes 130 and 140 may be electrically connected or communication-connected to the controller 160 and perform braking control or braking release control on the third and fourth brakes 130 and 140 in response to a signal for braking control or braking release control of the controller 160.

The one or more force sensors 10 may be electrically connected or communication-connected to the controller 132 of the third brake 130.

Therefore, the controller 132 may receive a signal corresponding to the clamping force of the third brake 130 from the one or more force sensors 10 and perform feedback control for adjusting the clamping force of the third brake 130.

The controller 132 of the third brake 130 may improve the precision of the clamping force of the third brake 130 by utilizing a signal correlation analysis function in the related art in response to the output signal of the first force sensor 11 and the output signal of the second force sensor 12.

For example, the controller 132 of the third brake 130 may control the third brake 130, i.e., perform the feedback control on the basis of the comparison between the output signal of the first force sensor 11 and the output signal of the second force sensor 12. Because the feedback control is a technology in the related art, a detailed description of the control will be omitted.

Additionally, the controller 132 of the third brake 130 may perform control to optimize the braking performance and maintain the stability of the third brake 130 by detecting an abnormal situation (e.g., detecting an error of any one force sensor or the like) by comparing and analyzing the output signal of the first force sensor 11 and the output signal of the second force sensor 12. That is, the first and second force sensors 11 and 12 may implement redundancy. When any one force sensor fails, the other force sensor may be utilized to control the corresponding brake.

For example, when any one of the first and second force sensors 11 and 12 is inoperable, the controller 132 of the third brake 130 may control the third brake 130 in response to the output signal of the other force sensor. Because the identification of the inoperability of the force sensor is a technology in the related art, a detailed description thereof will be omitted.

The controller 132 of the third brake 130 may utilize the first force sensor 11 as a main force sensor and utilize the second force sensor 12 as a sub-force sensor.

For example, the controller 132 of the third brake 130 may control the third brake 130, i.e., perform the feedback control in response to the output signal of the first force sensor 11. When the inoperability of the first force sensor 11 is identified, the controller 132 of the third brake 130 may control the third brake 130 in response to the output signal of the second force sensor 21. Because the identification of the inoperability of the force sensor is a technology in the related art, a detailed description thereof will be omitted.

The one or more force sensors 20 may be electrically connected or communication-connected to the controller 142 of the fourth brake 140. Therefore, the controller 142 may receive a signal corresponding to the clamping force of the fourth brake 140 from the one or more force sensors 20 and perform feedback control for adjusting the clamping force of the fourth brake 140.

The controller 142 of the fourth brake 140 may improve the precision of the clamping force of the fourth brake 140 by utilizing a signal correlation analysis function in the related art in response to the output signal of the third force sensor 21 and the output signal of the fourth force sensor 22.

For example, the controller 142 of the fourth brake 140 may control the fourth brake 140, i.e., perform the feedback control on the basis of the comparison between the output signal of the third force sensor 21 and the output signal of the fourth force sensor 22.

Additionally, the controller 142 of the fourth brake 140 may perform control to optimize the braking performance and maintain the stability of the fourth brake 140 by detecting an abnormal situation (e.g., detecting an error of any one force sensor or the like) by comparing and analyzing the output signal of the third force sensor 21 and the output signal of the fourth force sensor 22. That is, the third and fourth force sensors 21 and 22 may implement redundancy. When any one force sensor fails, the other force sensor may be utilized to control the corresponding brake.

For example, when any one of the third and fourth force sensors 21 and 22 is inoperable, the controller 142 of the fourth brake 140 may control the fourth brake 140 in response to the output signal of the other force sensor. Because the identification of the inoperability of the force sensor is a technology in the related art, a detailed description thereof will be omitted.

The controller 142 of the fourth brake 140 may utilize the third force sensor 21 as a main force sensor and utilize the fourth force sensor 22 as a sub-force sensor.

For example, the controller 142 of the fourth brake 140 may control the fourth brake 140, i.e., perform the feedback control in response to the output signal of the third force sensor 21. When the inoperability of the third force sensor 21 is identified, the controller 142 of the fourth brake 140 may control the fourth brake 140 in response to the output signal of the fourth force sensor 22. Because the identification of the inoperability of the force sensor is a technology in the related art, a detailed description thereof will be omitted.

The power supply device 150 may be configured to supply power to the constituent elements of the brake system 1, e.g., the controllers 132 and 142 of the third and fourth brakes 130 and 140, the force sensors 10 and 20, the controller 160, and/or the pedal displacement sensor 30.

The power supply device 150 may include a first power supply device 1510 and a second power supply device 1520 and implement redundancy of power.

The first power supply device 1510 and the second power supply device 1520 may include separate power circuits configured to provide power from different batteries or include separate power circuits separated from one battery.

For example, the first power supply device 1510 may include a first battery and/or a first power circuit configured to provide power from the first battery, and the second power supply device 1520 may include a second battery and/or a second power circuit configured to provide power from the second battery. Alternatively, the first power supply device 1510 and the second power supply device 1520 may respectively include the first and second power circuits configured to provide power from a single battery.

The controller 160 may be electrically connected or communication-connected to the pedal displacement sensor 30 for the brake pedal 31.

The controller 160 may receive an output signal of the pedal displacement sensor 30 and output signals for performing braking control or braking release control on the first brake 110, the second brake 120, the third brake 130, and/or the fourth brake 140 in response to the output signal of the pedal displacement sensor 30.

The pedal displacement sensor 30 may output a signal corresponding to a displacement (e.g., a movement distance and/or a movement speed) of the brake pedal 31. Therefore, the controller 160 may output a signal for braking control corresponding to the driver's braking intention by identifying the displacement of the brake pedal 31 in response to the output signal of the pedal displacement sensor 30.

The controller 160 may include a first controller 1610 and/or a second controller 1620.

For example, the first controller 1610 may be a basic controller of the brake system 1, and the second controller 1620 may be a backup controller.

For example, the first controller 1610 may control the first brake 110, the second brake 120, the third brake 130, and the fourth brake 140, and the second controller 1620 may control the first brake 110, the second brake 120, the third brake 130, and the fourth brake 140. In this case, the first controller 1610 may be a basic controller of the brake system 1, the second controller 1620 may be a backup controller, and the second controller 1620 may operate in the event of a failure or inoperability of the first controller 1610.

As another example, the first controller 1610 may control the first brake 110 and the second brake 120 and control the third brake 130 or the fourth brake 140. The second controller 1620 may control the first brake 110 and the second brake 120 and control the remaining one of the third and fourth brakes 130 and 140 that is not controlled by the first controller 1610. In this case, in the case of the first and second brakes 110 and 120, the first controller 1610 may be a basic controller, and the second controller 1620 may be a backup controller. Therefore, in the event of a failure or inoperability of the first controller 1610, the second controller 1620 may control the first brake 110 and the second brake 120 and control the remaining one of the third and fourth brakes 130 and 140 that is not a brake that is controlled by the first controller 1610 when no failure occurs.

As another example, the first controller 1610 may control the first brake 110 and the fourth brake 140, and the second controller 1620 may control the second brake 120 and the third brake 130.

The first controller 1610 may include a processor 1611 and a memory 1613.

The processor 1611 may process the output signal of the pedal displacement sensor 30 and output control signals for performing braking control on the first brake 110, the second brake 120, the third brake 130, and the fourth brake 140 in response to the output signal of the pedal displacement sensor 30.

The memory 1613 may store or memorize programs and data for implementing operations of controlling the components included in the brake system 1. The memory 1613 may provide the stored programs and data to the processor 1611 and memorize temporary data generated during the operation of the processor 1611.

The second controller 1620 may include a processor 1621 and a memory 1623.

The processor 1621 may process the output signal of the pedal displacement sensor 30 and output control signals for performing braking control on the first brake 110, the second brake 120, the third brake 130, and the fourth brake 140 in response to the output signal of the pedal displacement sensor 30.

The memory 1623 may store or memorize programs and data for implementing operations of controlling the components included in the brake system 1. The memory 1623 may provide the stored programs and data to the processor 1621 and memorize temporary data generated during the operation of the processor 1621.

The memory 1613 and the memory 1623 may each include volatile memories, such as a static random access memory (S-RAM) and a dynamic random access memory (D-RAM) , and non-volatile memories, such as a read-only memory (ROM), an erasable programmable read-only memory (EEPROM), an electrically erasable programmable read-only memory (EEPROM), and a flash memory.

The first controller 1610 and the second controller 1620 may each include one or more semiconductor elements and be called various terms such as an electronic control unit (ECU).

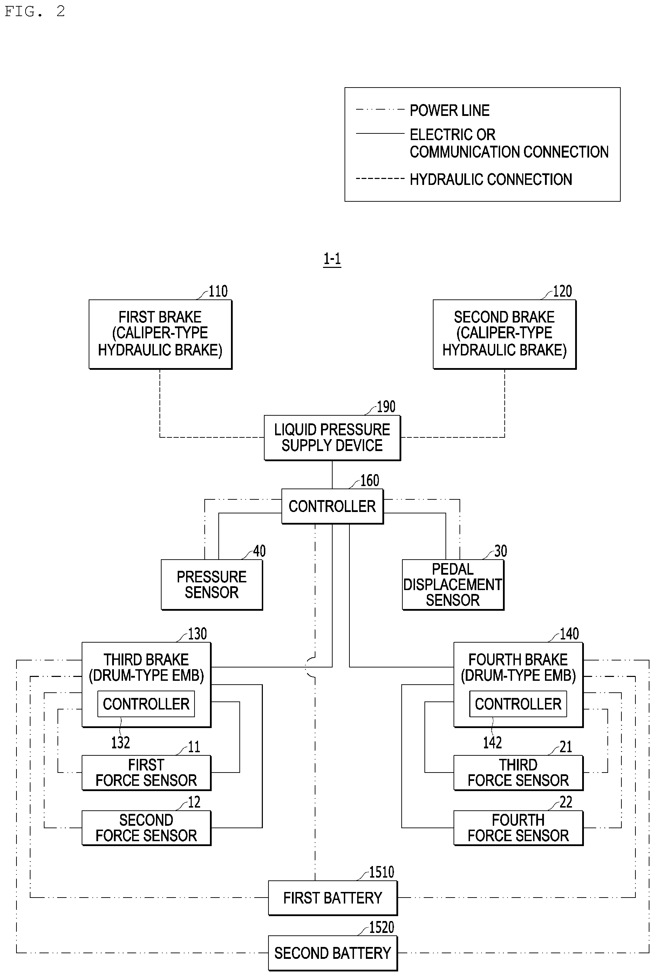

FIG. 2 is a view illustrating a configuration of the brake system (e.g., the brake system 1) according to the embodiment.

With reference to FIG. 2, a brake system 1-1 may include hydraulic brakes and drum-type electromechanical brakes.

The brake system 1-1 may include the first and second brakes 110 and 120 that are caliper-type hydraulic brakes, the third and fourth brakes 130 and 140 that are drum-type electromechanical brakes, the first and second force sensors 11 and 12 provided in the third brake 130, the third and fourth force sensors 21 and 22 provided in the fourth brake 140, a first battery 1510 corresponding to the first power supply device 1510 and a second battery 1520 corresponding to the second power supply device 1520, the first and second power supply devices being two independent power supply devices, the controller 160 configured to control at least one component of the brake system 1-1, a liquid pressure supply device 190 configured to provide liquid pressure to the first and second brakes 110 and 120, and a pressure sensor 40 capable of measuring liquid pressure of the pressing medium when the first and second brakes 110 and 120 are operated by the pedal displacement sensor 30 for the brake pedal 31 and/or the liquid pressure supply device 190.

The third brake 130 may include the controller 132, and the fourth brake 140 may include the controller 142.

The first and second brakes 110 and 120 may be hydraulically connected to the liquid pressure supply device 190 and generate the braking forces to the corresponding wheels w1 and w2 by receiving the liquid pressure from the liquid pressure supply device 190 or release the generation of the braking force.

The liquid pressure supply device 190 may be electrically connected or communication-connected to the controller 160 and operate by receiving the control signal from the controller 160.

The third and fourth brakes 130 and 140 may be electrically connected or communication-connected to the controller 160. For example, the controllers 132 and 142 of the third and fourth brakes 130 and 140 may be electrically connected or communication-connected to the controller 160.

The controllers 132 and 142 of the third and fourth brakes 130 and 140 may receive the control signal from the controller 160 and perform the braking control or braking release control on the third and fourth brakes 130 and 140.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the controller 160.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 of the fourth brake 140 may perform the braking control or braking release control on the fourth brake 140 in response to the control signal from the controller 160.

Additionally, the controller 142 may perform the signal correlation analysis function and/or feedback control in response to the output signals of the third and fourth force sensors 21 and 22. In addition, when any one of the third and fourth force sensors 21 and 22 fails, the controller 142 may utilize the remaining force sensor to control the fourth brake 140.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the controller 160 through a power line. Additionally, the first battery 1510 may supply power to the pedal displacement sensor 30 and the pressure sensor 40 via the controller 160.

The first battery 1510 may supply power to the third and fourth brakes 130 and 140 through the power lines.

The second battery 1520 may supply power to the third and fourth brakes 130 and 140 through the power lines.

The first and second force sensors 11 and 12 provided in the third brake 130 may receive power from the first battery 1510 and/or the second battery 1520 through the power lines via the third brake 130.

The third and fourth force sensors 21 and 22 provided in the fourth brake 140 may receive power from the first battery 1510 and/or the second battery 1520 through the power lines via the fourth brake 140.

The pedal displacement sensor 30 and the pressure sensor 40 may be electrically connected or communication-connected to the controller 160 and output signals for performing the braking control or braking release control on the first brake 110, the second brake 120, the third brake 130, and the fourth brake 140 in response to the output signals of the pedal displacement sensor 30 and/or the pressure sensor 40.

For example, the pedal displacement sensor 30 and the pressure sensor 40 may serve as redundancy from each other, such that when any one sensor fails, the other sensor may provide a backup replacement for the function.

Although not illustrated in the drawings, in the above-mentioned embodiment in FIG. 2, the third and fourth brakes 130 and 140, i.e., the controller 132 of the third brake 130 and the controller 142 of the fourth brake 140 may be electrically connected or communication-connected to each other and operate in cooperation with each other.

In addition, according to the above-mentioned configuration of the brake system 1-1 in FIG. 2, the two force sensors provided in each of the third and fourth brakes 130 and 140 implement the redundancy, such that when any one force sensor fails, the remaining force sensor may be utilized to control the corresponding brake.

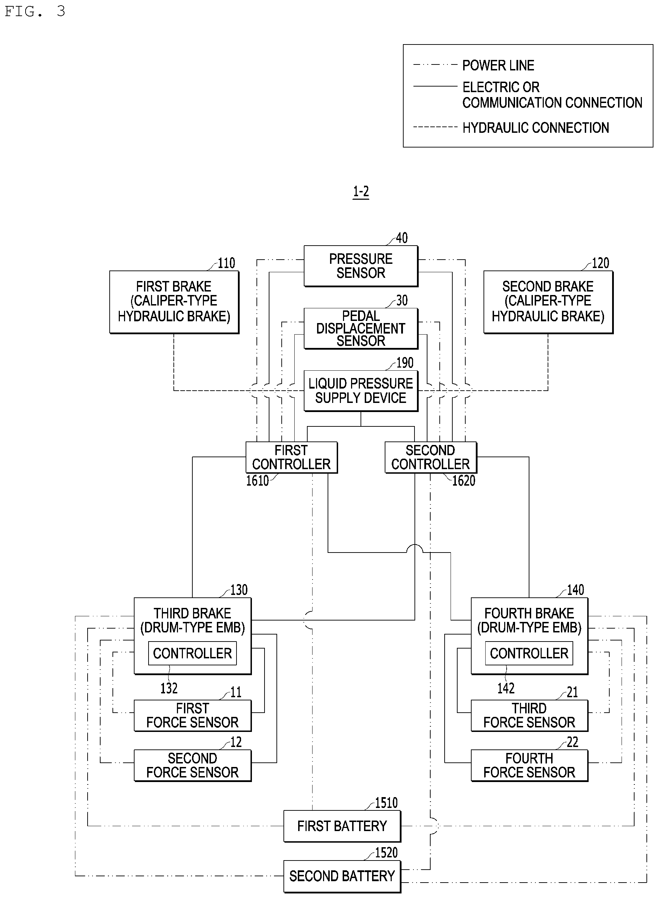

FIG. 3 is a view illustrating a configuration of the brake system (e.g., the brake system 1) according to the embodiment.

With reference to FIG. 3, a controller of a brake system 1-2 may be implemented as a dual type controller including the first controller 1610 and the second controller 1620.

The brake system 1-2 may include hydraulic brakes and drum-type electromechanical brakes.

The brake system 1-2 may include the first and second brakes 110 and 120 that are caliper-type hydraulic brakes, the third and fourth brakes 130 and 140 that are drum-type electromechanical brakes, the first and second force sensors 11 and 12 provided in the third brake 130, the third and fourth force sensors 21 and 22 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control at least one component of the brake system 1-2, the liquid pressure supply device 190 configured to provide liquid pressure to the first and second brakes 110 and 120, and the pressure sensor 40 capable of measuring liquid pressure of the pressing medium when the first and second brakes 110 and 120 are operated by the pedal displacement sensor 30 for the brake pedal 31 and/or the liquid pressure supply device 190.

The third brake 130 may include the controller 132, and the fourth brake 140 may include the controller 142.

The first and second brakes 110 and 120 may be hydraulically connected to the liquid pressure supply device 190 and generate the braking forces to the corresponding wheels w1 and w2 by receiving the liquid pressure from the liquid pressure supply device 190.

The liquid pressure supply device 190 may be electrically connected or communication-connected to the first and second controllers 1610 and 1620 and operate by receiving a control signal from the first controller 1610 or the second controller 1620.

The third and fourth brakes 130 and 140 may be respectively electrically connected or communication-connected to the first and second controllers 1610 and 1620. For example, the controllers 132 and 142 of the third and fourth brakes 130 and 140 may be respectively electrically connected or communication-connected to the first and second controllers 1610 and 1620.

The controllers 132 and 142 of the third and fourth brakes 130 and 140 may receive the control signal from the first controller 1610 or the second controller 1620 and perform the braking control or braking release control on the third and fourth brakes 130 and 140.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the first controller 1610 or the second controller 1620.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 of the fourth brake 140 may perform the braking control or braking release control on the fourth brake 140 in response to the control signal from the first controller 1610 or the second controller 1620.

Additionally, the controller 142 may perform the signal correlation analysis function and/or feedback control in response to the output signals of the third and fourth force sensors 21 and 22. In addition, when any one of the third and fourth force sensors 21 and 22 fails, the controller 142 may utilize the remaining force sensor to control the fourth brake 140.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the third and fourth brakes 130 and 140 through the power lines.

The second battery 1520 may supply power to the third and fourth brakes 130 and 140 through the power lines.

The first and second force sensors 11 and 12 provided in the third brake 130 may receive power from the first battery 1510 and/or the second battery 1520 through the power lines via the third brake 130.

The third and fourth force sensors 21 and 22 provided in the fourth brake 140 may receive power from the first battery 1510 and/or the second battery 1520 through the power lines via the fourth brake 140.

The pedal displacement sensor 30 and the pressure sensor 40 may be electrically connected or communication-connected to the first and second controllers 1610 and 1620. The first controller 1610 or the second controller 1620 may output signals for performing the braking control or braking release control on the first brake 110, the second brake 120, the third brake 130, and the fourth brake 140 in response to the output signals of the pedal displacement sensor 30 and/or the pressure sensor 40.

For example, the pedal displacement sensor 30 and the pressure sensor 40 may serve as redundancy from each other, such that when any one sensor fails, the other sensor may provide a backup replacement for the function.

The first and second controllers 1610 and 1620 may be electrically connected or communication-connected to each other. When any one of the first and second controllers 1610 and 1620 fails, the other controller may serve as a backup.

For example, the first controller 1610 may be a basic controller configured to control an overall operation of the brake system 1-2, and the second controller 1620 may be a backup controller. Therefore, when the first controller 1610 fails, the second controller 1620 may control the overall operation of the brake system 1-2.

According to the above-mentioned configuration of the brake system 1-2 in the embodiment in FIG. 3, when the first controller 1610 or the first battery 1510 fails, power is supplied to the pedal displacement sensor 30 and the pressure sensor 40 from the second battery 1520 through the second controller 1620, such that the second controller 1620 may control the brake system 1-2 in response to the output signals of the pedal displacement sensor 30 and/or the pressure sensor 40.

In addition, according to the above-mentioned configuration of the brake system 1-2 in FIG. 3, the two force sensors provided in each of the third and fourth brakes 130 and 140 implement the redundancy, such that when any one force sensor fails, the remaining force sensor may be utilized to control the corresponding brake.

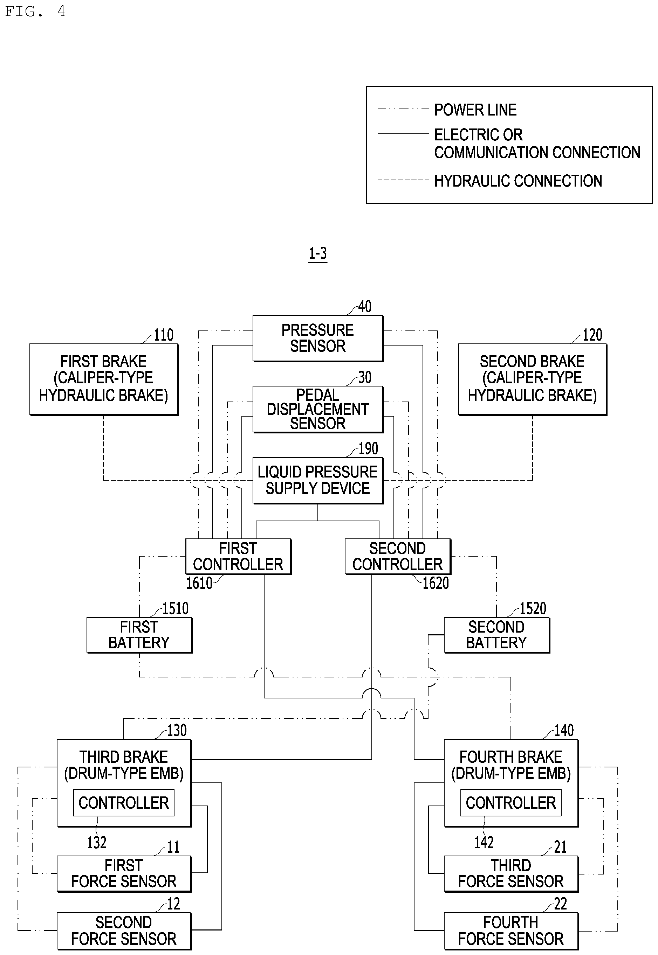

FIG. 4 is a view illustrating a configuration of the brake system (e.g., the brake system 1) according to the embodiment.

With reference to FIG. 4, a controller of a brake system 1-3 may be implemented as a dual type controller including the first controller 1610 and the second controller 1620.

The brake system 1-3 may include hydraulic brakes and drum-type electromechanical brakes.

The brake system 1-3 may include the first and second brakes 110 and 120 that are caliper-type hydraulic brakes, the third and fourth brakes 130 and 140 that are drum-type electromechanical brakes, the first and second force sensors 11 and 12 provided in the third brake 130, the third and fourth force sensors 21 and 22 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control at least one component of the brake system 1-3, the liquid pressure supply device 190 configured to provide liquid pressure to the first and second brakes 110 and 120, and the pressure sensor 40 capable of measuring liquid pressure of the pressing medium when the first and second brakes 110 and 120 are operated by the pedal displacement sensor 30 for the brake pedal 31 and/or the liquid pressure supply device 190.

The third brake 130 may include the controller 132, and the fourth brake 140 may include the controller 142.

The first and second brakes 110 and 120 may be hydraulically connected to the liquid pressure supply device 190 and generate the braking forces to the corresponding wheels w1 and w2 by receiving the liquid pressure from the liquid pressure supply device 190.

The liquid pressure supply device 190 may be electrically connected or communication-connected to the first and second controllers 1610 and 1620 and operate by receiving a control signal from the first controller 1610 or the second controller 1620.

The third brake 130 may be electrically connected or communication-connected to the second controller 1620. For example, the controller 132 of the third brake 130 may be electrically connected or communication-connected to the second controller 1620. The controller 132 of the third brake 130 may receive the control signal from the second controller 1610 and perform the braking control or braking release control on the third brake 130.

The fourth brake 140 may be electrically connected or communication-connected to the first controller 1610. For example, the controller 142 of the fourth brake 140 may be electrically connected or communication-connected to the first controller 1610. The controller 142 of the fourth brake 140 may receive the control signal from the first controller 1610 and perform the braking control or braking release control on the fourth brake 140.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the second controller 1620.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 may perform the braking control or braking release control on the fourth brake 140 in response to the control signal from the first controller 1610.

Additionally, the controller 142 may perform the signal correlation analysis function and/or feedback control in response to the output signals of the third and fourth force sensors 21 and 22. In addition, when any one of the third and fourth force sensors 21 and 22 fails, the controller 142 may utilize the remaining force sensor to control the fourth brake 140.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the fourth controller 140 through the power line.

The second battery 1520 may supply power to the third controller 130 through the power line.

The first and second force sensors 11 and 12 provided in the third brake 130 may receive power from the second battery 1520 through the power lines via the third brake 130.

The third and fourth force sensors 21 and 22 provided in the fourth brake 140 may receive power from the first battery 1510 through the power lines via the fourth brake 140.

The pedal displacement sensor 30 and the pressure sensor 40 may be electrically connected or communication-connected to the first and second controllers 1610 and 1620. The first controller 1610 or the second controller 1620 may output the signals for performing the braking control or braking release control on the first and second brakes 110 and 120 in response to the output signals of the pedal displacement sensor 30 and/or the pressure sensor 40. The first controller 1610 may output the signal for performing the braking control or braking release control on the fourth brake 140 in response to the output signals of the pedal displacement sensor 30 and/or the pressure sensor 40. The second controller 1620 may output the signal for performing the braking control or braking release control on the third brake 130 in response to the output signals of the pedal displacement sensor 30 and/or the pressure sensor 40.

For example, the pedal displacement sensor 30 and the pressure sensor 40 may serve as redundancy from each other, such that when any one sensor fails, the other sensor may provide a backup replacement for the function.

According to the above-mentioned configuration of the brake system 1-3 in the embodiment in FIG. 4, it can be seen that the power sources of the first controller 1610 and the fourth brake 140 are connected, and the power sources of the second controller 1620 and the third brake 130 are connected. According to the above-mentioned cross-connection of the power sources, the brake system 1-3 may stably perform the braking control even in a situation in which any one of the first battery 1510 and the second battery 1520 fails.

In addition, according to the above-mentioned configuration of the brake system 1-3 in FIG. 4, the two force sensors provided in each of the third and fourth brakes 130 and 140 implement the redundancy, such that when any one force sensor fails, the remaining force sensor may be utilized to control the corresponding brake.

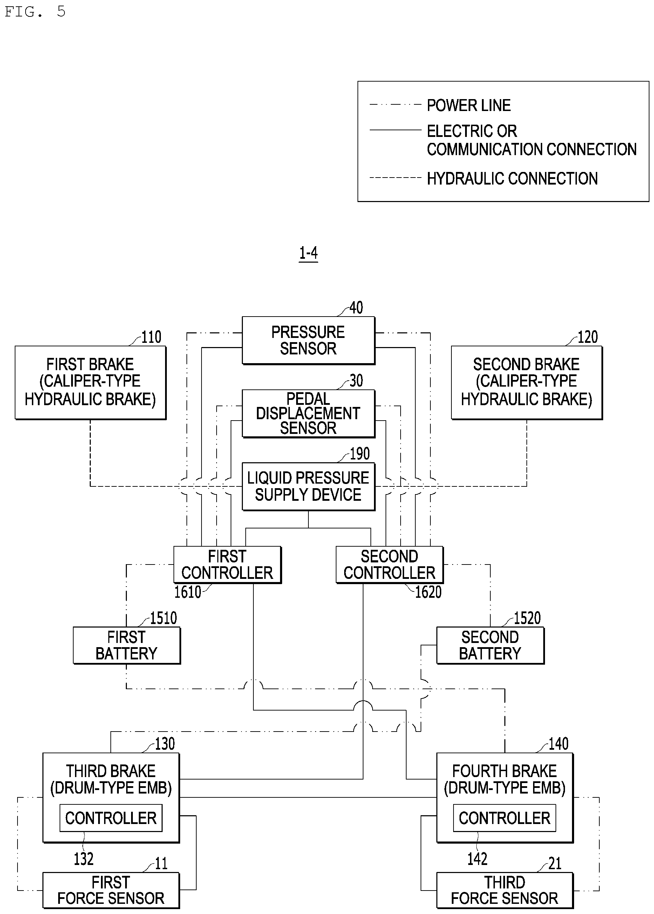

FIG. 5 is a view illustrating a configuration of the brake system (e.g., the brake system 1) according to the embodiment.

With reference to FIG. 5, a controller of a brake system 1-4 may be implemented as a dual type controller including the first controller 1610 and the second controller 1620.

The brake system 1-4 may include hydraulic brakes and drum-type electromechanical brakes.

The brake system 1-4 may include the first and second brakes 110 and 120 that are caliper-type hydraulic brakes, the third and fourth brakes 130 and 140 that are drum-type electromechanical brakes, the first force sensor 11 provided in the third brake 130, the third force sensor 21 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control at least one component of the brake system 1-4, the liquid pressure supply device 190 configured to provide liquid pressure to the first and second brakes 110 and 120, and the pressure sensor 40 capable of measuring liquid pressure of the pressing medium when the first and second brakes 110 and 120 are operated by the pedal displacement sensor 30 for the brake pedal 31 and/or the liquid pressure supply device 190.

The third brake 130 may include the controller 132, and the fourth brake 140 may include the controller 142.

The first and second brakes 110 and 120 may be hydraulically connected to the liquid pressure supply device 190 and generate the braking forces to the corresponding wheels w1 and w2 by receiving the liquid pressure from the liquid pressure supply device 190.

The liquid pressure supply device 190 may be electrically connected or communication-connected to the first and second controllers 1610 and 1620 and operate by receiving a control signal from the first controller 1610 or the second controller 1620.

The third brake 130 may be electrically connected or communication-connected to the second controller 1620. For example, the controller 132 of the third brake 130 may be electrically connected or communication-connected to the second controller 1620. The controller 132 of the third brake 130 may receive the control signal from the second controller 1610 and perform the braking control or braking release control on the third brake 130.

The fourth brake 140 may be electrically connected or communication-connected to the first controller 1610. For example, the controller 142 of the fourth brake 140 may be electrically connected or communication-connected to the first controller 1610. The controller 142 of the fourth brake 140 may receive the control signal from the first controller 1610 and perform the braking control or braking release control on the fourth brake 140.

The first force sensor 11 provided in the third brake 130 may be electrically connected or communication-connected to the third brake 130. For example, the first force sensor 11 may be electrically connected or communication-connected to the controller 132 of the third brake 130.

The controller 132 of the third brake 130 may perform the braking control or braking release control on the third brake 130 in response to the control signal from the second controller 1620.

The controller 132 may perform the feedback control in response to the output signal of the first force sensor 11.

The third force sensor 21 provided in the fourth brake 140 may be electrically connected or communication-connected to the fourth brake 140. For example, the third force sensor 21 may be electrically connected or communication-connected to the controller 142 of the fourth brake 140.

The controller 142 of the fourth brake 140 may perform the braking control or braking release control on the fourth brake 140 in response to the control signal from the first controller 1610.

The controller 142 may perform the feedback control in response to the output signal of the third force sensor 21.

The third brake 130 and the fourth brake 140 may be connected directly to each other (electrically connected directly to each other or communication-connected directly to each other), i.e., the controller 132 of the third brake 130 and the controller 142 of the fourth brake 140 may be connected directly to each other.

Therefore, when the first force sensor 11 fails, the controller 132 of the third brake 130 may control the third brake 130 in response to an output signal from a third force sensor 13. For example, when the first force sensor 11 fails, the controller 132 of the third brake 130 may receive the output signal of the third force sensor 13 from the controller 142 of the fourth brake 140.

In addition, when the third force sensor 13 fails, the controller 142 of the fourth brake 140 may control the fourth brake 140 in response to the output signal from the first force sensor 11. For example, when the third force sensor 13 fails, the controller 142 of the fourth brake 140 may receive the output signal of the first force sensor 11 from the controller 132 of the third brake 130.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the fourth controller 140 through the power line.

The second battery 1520 may supply power to the third controller 130 through the power line.

The first force sensor 11 provided in the third brake 130 may receive power from the second battery 1520 through the power line via the third brake 130.

The third force sensor 21 provided in the fourth brake 140 may receive power from the first battery 1510 through the power line via the fourth brake 140.

The pedal displacement sensor 30 and the pressure sensor 40 may be electrically connected or communication-connected to the first and second controllers 1610 and 1620. The first controller 1610 or the second controller 1620 may output the signals for performing the braking control on the first and second brakes 110 and 120 in response to the output signals of the pedal displacement sensor 30 and/or the pressure sensor 40. The first controller 1610 may output the signal for performing the braking control on the fourth brake 140 in response to the output signals of the pedal displacement sensor 30 and/or the pressure sensor 40. The second controller 1620 may output the signal for performing the braking control on the third brake 130 in response to the output signals of the pedal displacement sensor 30 and/or the pressure sensor 40.

For example, the pedal displacement sensor 30 and the pressure sensor 40 may serve as redundancy from each other, such that when any one sensor fails, the other sensor may provide a backup replacement for the function.

According to the above-mentioned configuration of the brake system 1-4 in the embodiment in FIG. 5, it can be seen that the power sources of the first controller 1610 and the fourth brake 140 are connected, and the power sources of the second controller 1620 and the third brake 130 are connected. According to the above-mentioned cross-connection of the power sources, the brake system 1 may stably perform the braking control even in a situation in which any one of the first battery 1510 and the second battery 1520 fails.

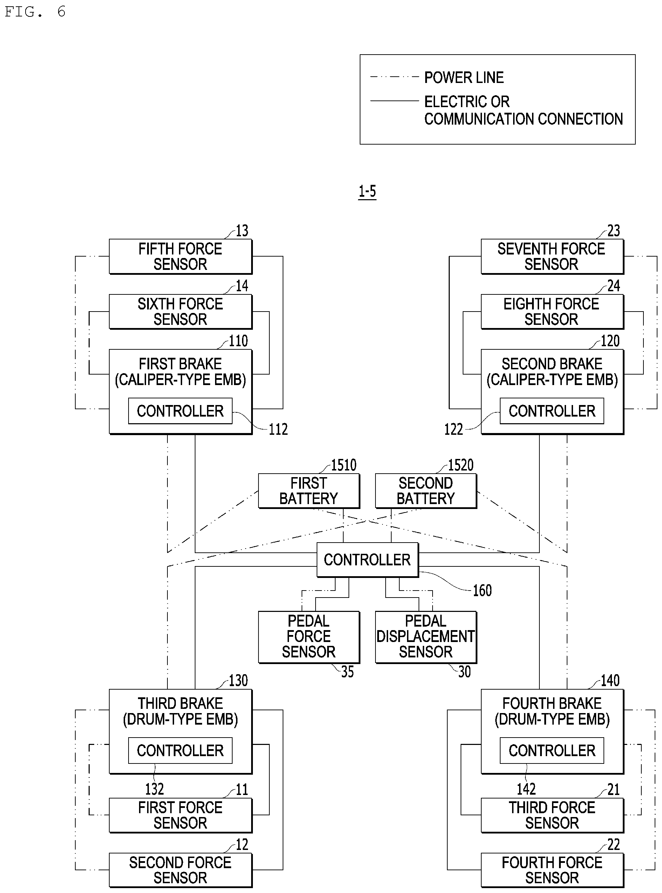

FIG. 6 is a view illustrating a configuration of the brake system (e.g., the brake system 1) according to the embodiment.

With reference to FIG. 6, a brake system 1-5 may include caliper-type electromechanical brakes and drum-type electromechanical brakes.

The brake system 1-5 may include the first and second brakes 110 and 120 that are caliper-type electromechanical brakes, the third and fourth brakes 130 and 140 that are drum-type electromechanical brakes, fifth and sixth force sensors 13 and 14 provided in the first brake 110, seventh and eighth force sensors 23 and 24 provided in the second brake 120, the first and second force sensors 11 and 12 provided in the third brake 130, the third and fourth force sensors 21 and 22 provided in the fourth brake 140, the first battery 1510 corresponding to the first power supply device 1510 and the second battery 1520 corresponding to the second power supply device 1520, the first and second power supply devices being two independent power supply devices, the controller 160 configured to control at least one component of the brake system 1-5, and a pedal force sensor 35 for the brake pedal 31, the pedal force sensor 35 being configured to output a signal corresponding to a force applied to the pedal displacement sensor 30 for the brake pedal 31 and/or the brake pedal 31.

The first brake 110 may include a controller 112, the second brake 120 may include a controller 122, the third brake 130 may include the controller 132, and the fourth brake 140 may include the controller 142.

The first and second brakes 110 and 120 may be electrically connected or communication-connected to the controller 160. For example, the controllers 112 and 122 of the first and second brakes 110 and 120 may be electrically connected or communication-connected to the controller 160.

The controllers 112 and 122 of the first and second brakes 110 and 120 may receive the control signal from the controller 160 and perform the braking control or braking release control on the first and second brakes 110 and 120.

The third and fourth brakes 130 and 140 may be electrically connected or communication-connected to the controller 160. For example, the controllers 132 and 142 of the third and fourth brakes 130 and 140 may be electrically connected or communication-connected to the controller 160.

The controllers 132 and 142 of the third and fourth brakes 130 and 140 may receive the control signal from the controller 160 and perform the braking control or braking release control on the third and fourth brakes 130 and 140.

The dual type fifth and sixth force sensors 13 and 14 provided in the first brake 110 may be electrically connected or communication-connected to the first brake 110. For example, the fifth and sixth force sensors 13 and 14 may be electrically connected or communication-connected to the controller 112 of the first brake 110.

The controller 112 of the first brake 110 may perform the braking control or braking release control on the first brake 110 in response to the control signal from the controller 160.

Additionally, the controller 112 may perform the signal correlation analysis function and/or feedback control in response to the output signals of the fifth and sixth force sensors 13 and 14. In addition, when any one of the fifth and sixth force sensors 13 and 14 fails, the controller 112 may utilize the remaining force sensor to control the first brake 110.

Alternatively, the controller 112 may perform the feedback control on the first brake 110 by utilizing the fifth force sensor 13 as a main force sensor and utilizing the sixth force sensor 14 as a sub-force sensor. For example, the controller 112 may control the first brake 110 in response to the output signal of the fifth force sensor 13. When the inoperability of the fifth force sensor 13 is identified, the controller 112 may control the first brake 110 in response to the output signal of the sixth force sensor 14.

The dual type seventh and eighth force sensors 23 and 24 provided in the second brake 120 may be electrically connected or communication-connected to the second brake 120. For example, the seventh and eighth force sensors 23 and 24 may be electrically connected or communication-connected to the controller 122 of the second brake 120.

The controller 122 of the second brake 120 may perform the braking control or braking release control on the second brake 120 in response to the control signal from the controller 160.

Additionally, the controller 122 may perform the signal correlation analysis function and/or feedback control in response to the output signals of the seventh and eighth force sensors 23 and 24. In addition, when any one of the seventh and eighth force sensors 23 and 24 fails, the controller 122 may utilize the remaining force sensor to control the second brake 120.

Alternatively, the controller 122 may perform the feedback control on the second brake 120 by utilizing the seventh force sensor 23 as a main force sensor and utilizing the eighth force sensor 24 as a sub-force sensor. For example, the controller 122 may control the second brake 120 in response to the output signal of the seventh force sensor 23. When the inoperability of the seventh force sensor 23 is identified, the controller 122 may control the second brake 120 in response to the output signal of the eighth force sensor 24.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the controller 160.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 may perform the braking control or braking release control on the fourth brake 140 in response to the control signal from the controller 160.

Additionally, the controller 142 may perform the signal correlation analysis function and/or feedback control in response to the output signals of the third and fourth force sensors 21 and 22. In addition, when any one of the third and fourth force sensors 21 and 22 fails, the controller 142 may utilize the remaining force sensor to control the fourth brake 140.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the controller 160 through a power line. Additionally, the first battery 1510 may supply power to the pedal displacement sensor 30 and the pressure sensor 40 via the controller 160.

The first battery 1510 may supply power to the first and fourth brakes 110 and 140 through the power lines.

The second battery 1520 may supply power to the second and third brakes 120 and 130 through the power lines.

The fifth and sixth force sensors 13 and 14 provided in the first brake 110 may receive power from the first battery 1510 through the power lines via the first brake 110.

The seventh and eighth force sensors 23 and 24 provided in the second brake 120 may receive power from the second battery 1520 through the power lines via the second brake 120.

The first and second force sensors 11 and 12 provided in the third brake 130 may receive power from the second battery 1520 through the power lines via the third brake 130.

The third and fourth force sensors 21 and 22 provided in the fourth brake 140 may receive power from the first battery 1510 through the power lines via the fourth brake 140.

The pedal displacement sensor 30 and the pedal force sensor 35 may be electrically connected or communication-connected to the controller 160 and output signals for performing the braking control on the first brake 110, the second brake 120, the third brake 130, and the fourth brake 140 in response to the output signals of the pedal displacement sensor 30 and/or the pedal force sensor 35.

For example, the pedal displacement sensor 30 and the pedal force sensor 35 may serve as redundancy from each other, such that when any one sensor fails, the other sensor may provide a backup replacement for the function.

Although not illustrated in the drawings, in the above-mentioned embodiment in FIG. 6, the third and fourth brakes 130 and 140, i.e., the controller 132 of the third brake 130 and the controller 142 of the fourth brake 140 may be electrically connected or communication-connected to each other and operate in cooperation with each other.

In addition, according to the above-mentioned configuration of the brake system 1-5 in FIG. 6, the two force sensors provided in each of the first brake 110, the second brake 120, the third brake 130, and the fourth brake 140 implement the redundancy, such that when any one force sensor fails, the remaining force sensor may be utilized to control the corresponding brake.

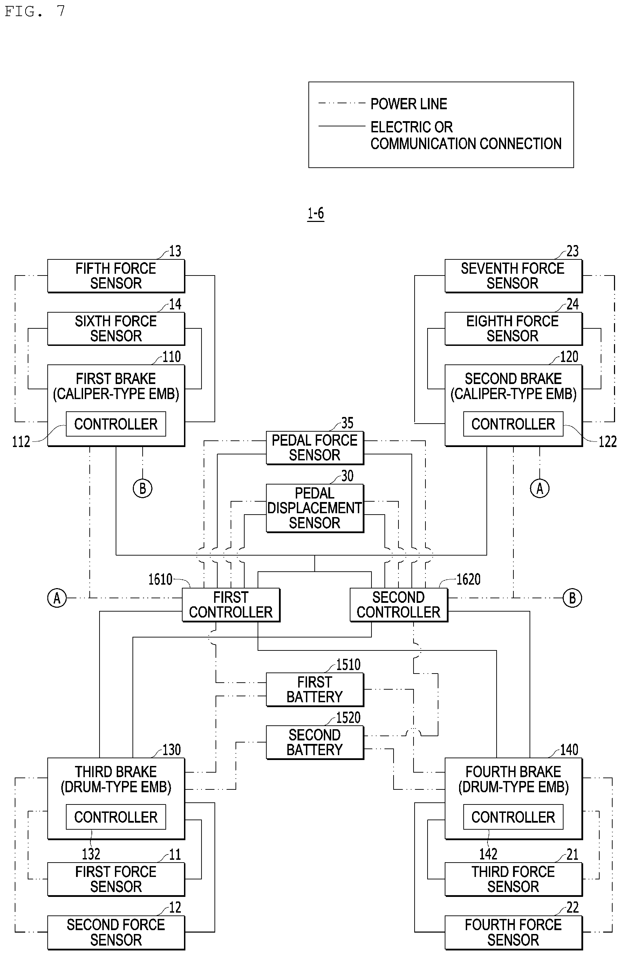

FIG. 7 is a view illustrating a configuration of the brake system (e.g., the brake system 1) according to the embodiment.

With reference to FIG. 7, a brake system 1-6 may include caliper-type electromechanical brakes and drum-type electromechanical brakes.

The brake system 1-6 may include the first and second brakes 110 and 120 that are caliper-type electromechanical brakes, the third and fourth brakes 130 and 140 that are drum-type electromechanical brakes, the fifth and sixth force sensors 13 and 14 provided in the first brake 110, the seventh and eighth force sensors 23 and 24 provided in the second brake 120, the first and second force sensors 11 and 12 provided in the third brake 130, the third and fourth force sensors 21 and 22 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control components of the brake system 1-6, and the pedal force sensor 35 for the brake pedal 31, the pedal force sensor 35 being configured to output the signal corresponding to the force applied to the pedal displacement sensor 30 for the brake pedal 31 and/or the brake pedal 31.

The first brake 110 may include a controller 112, the second brake 120 may include a controller 122, the third brake 130 may include the controller 132, and the fourth brake 140 may include the controller 142.

The first brake 110 may be electrically connected or communication-connected to the first and second controllers 1610 and 1620. For example, the controller 112 of the first brake 110 may be electrically connected or communication-connected to the first and second controllers 1610 and 1620.

The second brake 120 may be electrically connected or communication-connected to the first and second controllers 1610 and 1620. For example, the controller 122 of the second brake 120 may be electrically connected or communication-connected to the first and second controllers 1610 and 1620.

The controllers 112 and 122 of the first and second brakes 110 and 120 may receive the control signal from the first controller 1610 or the second controller 1620 and perform the braking control or braking release control on the first and second brakes 110 and 120.

The third brake 130 may be electrically connected or communication-connected to the second controller 1620. For example, the controller 132 of the third brake 130 may be electrically connected or communication-connected to the second controller 1620. The controller 132 of the third brake 130 may receive the control signal from the second controller 1620 and perform the braking control or braking release control on the third brake 130.

The fourth brake 140 may be electrically connected or communication-connected to the first controller 1610. For example, the controller 142 of the fourth brake 140 may be electrically connected or communication-connected to the first controller 1610. The controller 142 of the fourth brake 140 may receive the control signal from the first controller 1610 and perform the braking control or braking release control on the fourth brake 140.

The dual type fifth and sixth force sensors 13 and 14 provided in the first brake 110 may be electrically connected or communication-connected to the first brake 110. For example, the fifth and sixth force sensors 13 and 14 may be electrically connected or communication-connected to the controller 112 of the first brake 110.

The controller 112 of the first brake 110 may perform the braking control or braking release control on the first brake 110 in response to the control signal from the first controller 1610 or the second controller 1620.

Additionally, the controller 112 may perform the signal correlation analysis function and/or feedback control in response to the output signals of the fifth and sixth force sensors 13 and 14. In addition, when any one of the fifth and sixth force sensors 13 and 14 fails, the controller 112 may utilize the remaining force sensor to control the first brake 110.

Alternatively, the controller 112 may perform the feedback control on the first brake 110 by utilizing the fifth force sensor 13 as a main force sensor and utilizing the sixth force sensor 14 as a sub-force sensor. For example, the controller 112 may control the first brake 110 in response to the output signal of the fifth force sensor 13. When the inoperability of the fifth force sensor 13 is identified, the controller 112 may control the first brake 110 in response to the output signal of the sixth force sensor 14.

The dual type seventh and eighth force sensors 23 and 24 provided in the second brake 120 may be electrically connected or communication-connected to the second brake 120. For example, the seventh and eighth force sensors 23 and 24 may be electrically connected or communication-connected to the controller 122 of the second brake 120.

The controller 122 of the second brake 120 may perform the braking control or braking release control on the second brake 120 in response to the control signal from the first controller 1610 or the second controller 1620.

Additionally, the controller 122 may perform the signal correlation analysis function and/or feedback control in response to the output signals of the seventh and eighth force sensors 23 and 24. In addition, when any one of the seventh and eighth force sensors 23 and 24 fails, the controller 122 may utilize the remaining force sensor to control the second brake 120.

Alternatively, the controller 122 may perform the feedback control on the second brake 120 by utilizing the seventh force sensor 23 as a main force sensor and utilizing the eighth force sensor 24 as a sub-force sensor. For example, the controller 122 may control the second brake 120 in response to the output signal of the seventh force sensor 23. When the inoperability of the seventh force sensor 23 is identified, the controller 122 may control the second brake 120 in response to the output signal of the eighth force sensor 24.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the second controller 1620.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 may perform the braking control or braking release control on the fourth brake 140 in response to the control signal from the first controller 1610.

Additionally, the controller 142 may perform the signal correlation analysis function and/or feedback control in response to the output signals of the third and fourth force sensors 21 and 22.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the first brake 110 and/or the second brake 120, i.e., the controller 112 of the first brake 110 and/or the controller 122 of the second brake 120 through the power lines via the first controller 1610. In addition, the second battery 1520 may supply power to the first brake 110 and/or the second brake 120, i.e., the controller 112 of the first brake 110 and/or the controller 122 of the second brake 120 through the power lines via the second controller 1620.

The fifth and sixth force sensors 13 and 14 provided in the first brake 110 may receive power from the first battery 1510 and/or the second battery 1520 through the power lines via the first brake 110.

The seventh and eighth force sensors 23 and 24 provided in the second brake 120 may receive power from the first battery 1510 and/or the second battery 1520 through the power lines via the second brake 120.

The first battery 1510 may supply power to the fourth controller 140 through the power line.

The third and fourth force sensors 21 and 22 provided in the fourth brake 140 may receive power from the first battery 1510 through the power lines via the fourth brake 140.

The second battery 1520 may supply power to the third controller 130 through the power line.

The first and second force sensors 11 and 12 provided in the third brake 130 may receive power from the second battery 1520 through the power lines via the third brake 130.

The pedal displacement sensor 30 and the pedal force sensor 35 may be electrically connected or communication-connected to the first and second controllers 1610 and 1620. The first controller 1610 or the second controller 1620 may output the signals for performing the braking control on the first and second brakes 110 and 120 in response to the output signals of the pedal displacement sensor 30 and/or the pedal force sensor 35. The first controller 1610 may output the signal for performing the braking control on the fourth brake 140 in response to the output signals of the pedal displacement sensor 30 and/or the pedal force sensor 35. The second controller 1620 may output the signal for performing the braking control on the third brake 130 in response to the output signals of the pedal displacement sensor 30 and/or the pedal force sensor 35.

For example, the pedal displacement sensor 30 and the pedal force sensor 35 may serve as redundancy from each other, such that when any one sensor fails, the other sensor may provide a backup replacement for the function.

In the above-mentioned brake system 1-6 in FIG. 7, the first and second controllers 1610 and 1620 may be electrically connected or communication-connected to each other. When any one of the first and second controllers 1610 and 1620 fails, the other controller may serve as a backup.

For example, the first controller 1610 may be a basic controller configured to control an overall operation of the brake system 1-2, and the second controller 1620 may be a backup controller. Therefore, when the first controller 1610 fails, the second controller 1620 may control the overall operation of the brake system 1-2.

In addition, according to the above-mentioned configuration of the brake system 1-6 in the embodiment in FIG. 7, it can be seen that the power sources of the first controller 1610 and the fourth brake 140 are connected, and the power sources of the second controller 1620 and the third brake 130 are connected. According to the above-mentioned connection of the power sources, the brake system 1 may stably perform the braking control even in a situation in which any one of the first battery 1510 and the second battery 1520 fails.

For example, when the first controller 1610 or the first battery 1510 fails, power is supplied to the pedal displacement sensor 30 and the pressure sensor 40 from the second battery 1520 through the second controller 1620, such that the second controller 1620 may control the brake system 1-2 in response to the output signals of the pedal displacement sensor 30 and/or the pressure sensor 40.

In addition, according to the above-mentioned configuration of the brake system 1-6 in FIG. 7, the two force sensors provided in each of the first brake 110, the second brake 120, the third brake 130, and the fourth brake 140 implement the redundancy, such that when any one force sensor fails, the remaining force sensor may be utilized to control the corresponding brake.

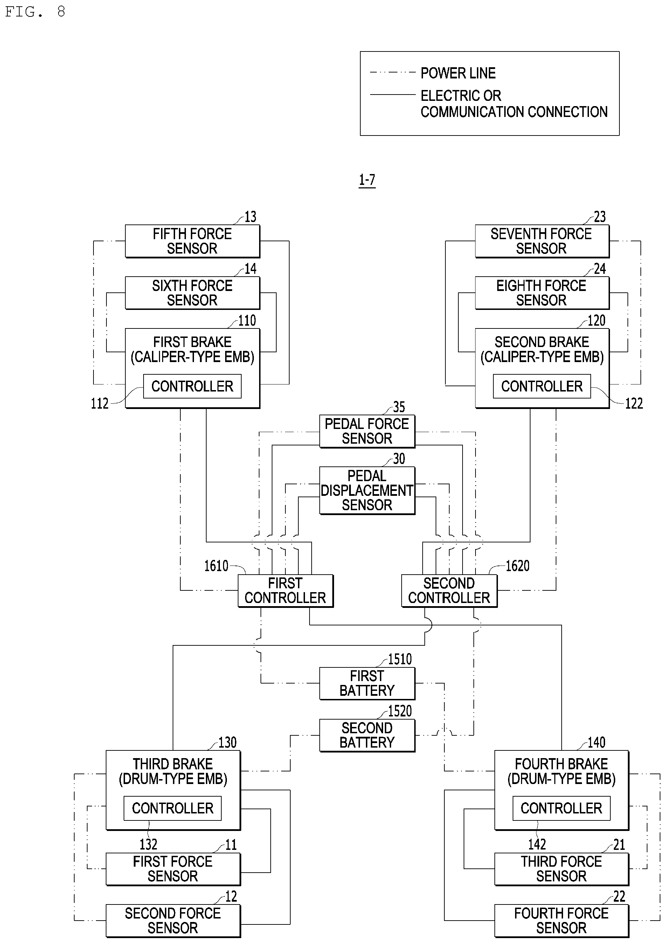

FIG. 8 is a view illustrating a configuration of the brake system (e.g., the brake system 1) according to the embodiment.

With reference to FIG. 8, a brake system 1-7 may include caliper-type electromechanical brakes and drum-type electromechanical brakes.

The brake system 1-7 may include the first and second brakes 110 and 120 that are caliper-type electromechanical brakes, the third and fourth brakes 130 and 140 that are drum-type electromechanical brakes, the fifth and sixth force sensors 13 and 14 provided in the first brake 110, the seventh and eighth force sensors 23 and 24 provided in the second brake 120, the first and second force sensors 11 and 12 provided in the third brake 130, the third and fourth force sensors 21 and 22 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control at least one component of the brake system 1-6, and the pedal force sensor 35 for the brake pedal 31, the pedal force sensor 35 being configured to output the signal corresponding to the force applied to the pedal displacement sensor 30 for the brake pedal 31 and/or the brake pedal 31.

The first brake 110 may include a controller 112, the second brake 120 may include a controller 122, the third brake 130 may include the controller 132, and the fourth brake 140 may include the controller 142.

The first brake 110 may be electrically connected or communication-connected to the first controller 1610. For example, the controller 112 of the first brake 110 may be electrically connected or communication-connected to the first controller 1610. The controller 112 of the first brake 110 may receive the control signal from the first controller 1610 and perform the braking control or braking release control on the first brake 110.

The second brake 120 may be electrically connected or communication-connected to the second controller 1620. For example, the controller 122 of the second brake 120 may be electrically connected or communication-connected to the second controller 1620. The controller 122 of the second brake 120 may receive the control signal from the second controller 1620 and perform the braking control or braking release control on the second brake 120.

The third brake 130 may be electrically connected or communication-connected to the second controller 1620. For example, the controller 132 of the third brake 130 may be electrically connected or communication-connected to the second controller 1620. The controller 132 of the third brake 130 may receive the control signal from the second controller 1620 and perform the braking control or braking release control on the third brake 130.

The fourth brake 140 may be electrically connected or communication-connected to the first controller 1610. For example, the controller 142 of the fourth brake 140 may be electrically connected or communication-connected to the first controller 1610. The controller 142 of the fourth brake 140 may receive the control signal from the first controller 1610 and perform the braking control or braking release control on the fourth brake 140.

The dual type fifth and sixth force sensors 13 and 14 provided in the first brake 110 may be electrically connected or communication-connected to the first brake 110. For example, the fifth and sixth force sensors 13 and 14 may be electrically connected or communication-connected to the controller 112 of the first brake 110.

The controller 112 of the first brake 110 may perform the braking control or braking release control on the first brake 110 in response to the control signal from the first controller 1610.

Additionally, the controller 112 may perform the signal correlation analysis function and/or feedback control in response to the output signals of the fifth and sixth force sensors 13 and 14. In addition, when any one of the fifth and sixth force sensors 13 and 14 fails, the controller 112 may utilize the remaining force sensor to control the first brake 110.

Alternatively, the controller 112 may perform the feedback control on the first brake 110 by utilizing the fifth force sensor 13 as a main force sensor and utilizing the sixth force sensor 14 as a sub-force sensor. For example, the controller 112 may control the first brake 110 in response to the output signal of the fifth force sensor 13. When the inoperability of the fifth force sensor 13 is identified, the controller 112 may control the first brake 110 in response to the output signal of the sixth force sensor 14.

The dual type seventh and eighth force sensors 23 and 24 provided in the second brake 120 may be electrically connected or communication-connected to the second brake 120. For example, the seventh and eighth force sensors 23 and 24 may be electrically connected or communication-connected to the controller 122 of the second brake 120.

The controller 122 of the second brake 120 may perform the braking control or braking release control on the second brake 120 in response to the control signal from the second controller 1620.

Additionally, the controller 122 may perform the signal correlation analysis function and/or feedback control in response to the output signals of the seventh and eighth force sensors 23 and 24. In addition, when any one of the seventh and eighth force sensors 23 and 24 fails, the controller 122 may utilize the remaining force sensor to control the second brake 120.

Alternatively, the controller 122 may perform the feedback control on the second brake 120 by utilizing the seventh force sensor 23 as a main force sensor and utilizing the eighth force sensor 24 as a sub-force sensor. For example, the controller 122 may control the second brake 120 in response to the output signal of the seventh force sensor 23. When the inoperability of the seventh force sensor 23 is identified, the controller 122 may control the second brake 120 in response to the output signal of the eighth force sensor 24.

The dual type first and second force sensors 11 and 12 provided in the third brake 130 may be electrically connected or communication-connected to the third brake 130. For example, the first and second force sensors 11 and 12 may be electrically connected or communication-connected to the controller 132 of the third brake 130.

The controller 132 of the third brake 130 may perform the braking control or braking release control on the third brake 130 in response to the control signal from the second controller 1620.

Additionally, the controller 132 may perform the signal correlation analysis function and/or feedback control in response to the output signals of the first and second force sensors 11 and 12. In addition, when any one of the first and second force sensors 11 and 12 fails, the controller 132 may utilize the remaining force sensor to control the third brake 130.

Alternatively, the controller 132 may perform the feedback control on the third brake 130 by utilizing the first force sensor 11 as a main force sensor and utilizing the second force sensor 12 as a sub-force sensor. For example, the controller 132 may control the third brake 130 in response to the output signal of the first force sensor 11. When the inoperability of the first force sensor 11 is identified, the controller 132 may control the third brake 130 in response to the output signal of the second force sensor 21.

The dual type third and fourth force sensors 21 and 22 provided in the fourth brake 140 may be electrically connected or communication-connected to the fourth brake 140. For example, the third and fourth force sensors 21 and 22 may be electrically connected or communication-connected to the controller 142 of the fourth brake 140.

The controller 142 may perform the braking control or braking release control on the fourth brake 140 in response to the control signal from the first controller 1610.

Additionally, the controller 142 may perform the signal correlation analysis function and/or feedback control in response to the output signals of the third and fourth force sensors 21 and 22.

Alternatively, the controller 142 may perform the feedback control on the fourth brake 140 by utilizing the third force sensor 21 as a main force sensor and utilizing the fourth force sensor 22 as a sub-force sensor. For example, the controller 142 may control the fourth brake 140 in response to the output signal of the third force sensor 21. When the inoperability of the third force sensor 21 is identified, the controller 142 may control the fourth brake 140 in response to the output signal of the fourth force sensor 22.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the first brake 110, i.e., the controller 112 of the first brake 110 via the first controller 1610. In addition, the second battery 1520 may supply power to the second brake 120, i.e., the controller 122 of the second brake 120 via the second controller 1620.

The fifth and sixth force sensors 13 and 14 provided in the first brake 110 may receive power from the first battery 1510 through the power lines via the first brake 110.

The seventh and eighth force sensors 23 and 24 provided in the second brake 120 may receive power from the second battery 1520 through the power lines via the second brake 120.

The first battery 1510 may supply power to the fourth controller 140 through the power line.

The third and fourth force sensors 21 and 22 provided in the fourth brake 140 may receive power from the first battery 1510 through the power lines via the fourth brake 140.

The second battery 1520 may supply power to the third controller 130 through the power line.

The first and second force sensors 11 and 12 provided in the third brake 130 may receive power from the second battery 1520 through the power lines via the third brake 130.

The pedal displacement sensor 30 and the pedal force sensor 35 may be electrically connected or communication-connected to the first and second controllers 1610 and 1620. The first controller 1610 may output the signal for performing the braking control or braking release control on the first brake 110 in response to the output signals of the pedal displacement sensor 30 and/or the pedal force sensor 35. The second controller 1620 may output the signal for performing the braking control or braking release control on the second brake 120 in response to the output signals of the pedal displacement sensor 30 and/or the pedal force sensor 35. The first controller 1610 may output the signal for performing the braking control or braking release control on the fourth brake 140 in response to the output signals of the pedal displacement sensor 30 and/or the pedal force sensor 35. The second controller 1620 may output the signal for performing the braking control or braking release control on the third brake 130 in response to the output signals of the pedal displacement sensor 30 and/or the pedal force sensor 35.

For example, the pedal displacement sensor 30 and the pedal force sensor 35 may serve as redundancy from each other, such that when any one sensor fails, the other sensor may provide a backup replacement for the function.

According to the above-mentioned configuration of the brake system 1-7 in FIG. 8, it can be seen that the power sources of the first controller 1610, the first brake 110, and the fourth brake 140 are connected, and the power sources of the second controller 1620, the second brake 120, and the third brake 130 are connected. According to the above-mentioned cross-connection of the power sources, the brake system 1 may stably perform the braking control even in a situation in which any one of the first battery 1510 and the second battery 1520 fails.

For example, when the first battery 1510 or the second battery 1520 fails, the brake system 1-7 may stably perform the braking control on the basis of the braking control of the two brakes having the cross-connection relationship by means of the battery, which operates normally, and the controller, which receives power from the corresponding battery.

In addition, according to the above-mentioned configuration of the brake system 1-7 in FIG. 8, the two force sensors provided in each of the first brake 110, the second brake 120, the third brake 130, and the fourth brake 140 implement the redundancy, such that when any one force sensor fails, the remaining force sensor may be utilized to control the corresponding brake.

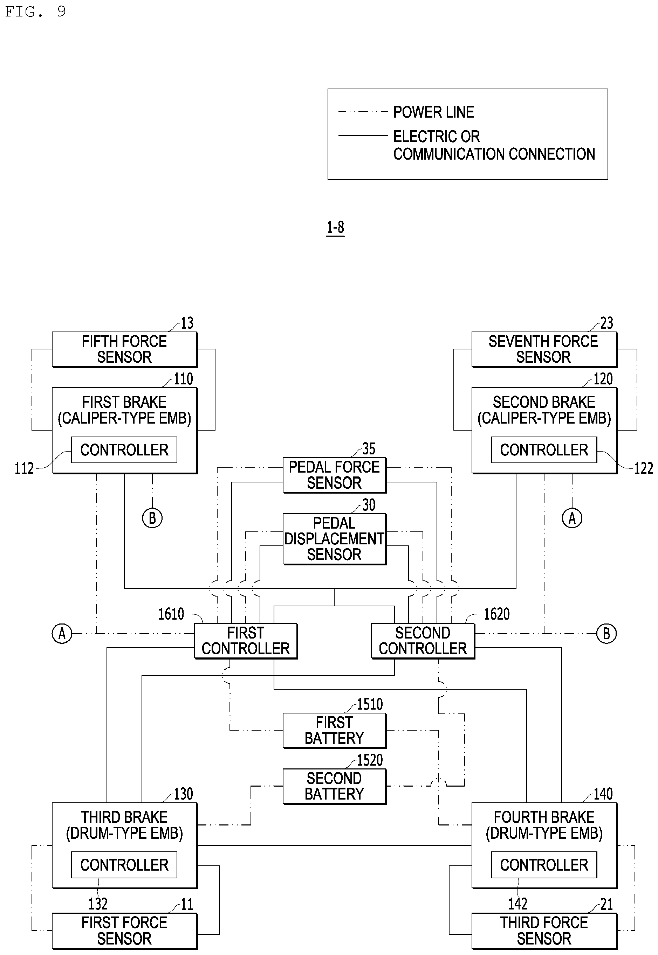

FIG. 9 is a view illustrating a configuration of the brake system (e.g., the brake system 1) according to the embodiment.

With reference to FIG. 9, a brake system 1-8 may include caliper-type electromechanical brakes and drum-type electromechanical brakes.

The brake system 1-7 may include the first and second brakes 110 and 120 that are caliper-type electromechanical brakes, the third and fourth brakes 130 and 140 that are drum-type electromechanical brakes, the fifth force sensor 13 provided in the first brake 110, the seventh force sensor 23 provided in the second brake 120, the first force sensor 11 provided in the third brake 130, the third force sensor 21 provided in the fourth brake 140, the first battery 1510 corresponding to the first power supply device 1510 and the second battery 1520 corresponding to the second power supply device 1520, the first and second power supply devices being two independent power supply devices, the first and second controllers 1610 and 1620 configured to control at least one component of the brake system 1-6, and the pedal force sensor 35 for the brake pedal 31, the pedal force sensor 35 being configured to output the signal corresponding to the force applied to the pedal displacement sensor 30 for the brake pedal 31 and/or the brake pedal 31.

The first brake 110 may include a controller 112, the second brake 120 may include a controller 122, the third brake 130 may include the controller 132, and the fourth brake 140 may include the controller 142.

The first brake 110 may be electrically connected or communication-connected to the first controller 1610. For example, the controller 112 of the first brake 110 may be electrically connected or communication-connected to the first controller 1610. The controller 112 of the first brake 110 may receive the control signal from the first controller 1610 and perform the braking control or braking release control on the first brake 110.

The second brake 120 may be electrically connected or communication-connected to the second controller 1620. For example, the controller 122 of the second brake 120 may be electrically connected or communication-connected to the second controller 1620. The controller 122 of the second brake 120 may receive the control signal from the second controller 1620 and perform the braking control or braking release control on the second brake 120.

The third brake 130 may be electrically connected or communication-connected to the second controller 1620. For example, the controller 132 of the third brake 130 may be electrically connected or communication-connected to the second controller 1620. The controller 132 of the third brake 130 may receive the control signal from the second controller 1620 and perform the braking control or braking release control on the third brake 130.

The fourth brake 140 may be electrically connected or communication-connected to the first controller 1610. For example, the controller 142 of the fourth brake 140 may be electrically connected or communication-connected to the first controller 1610. The controller 142 of the fourth brake 140 may receive the control signal from the first controller 1610 and perform the braking control or braking release control on the fourth brake 140.

The fifth force sensor 13 provided in the first brake 110 may be electrically connected or communication-connected to the first brake 110. For example, the fifth force sensor 13 may be electrically connected or communication-connected to the controller 112 of the first brake 110.

The controller 112 of the first brake 110 may perform the braking control or braking release control on the first brake 110 in response to the control signal from the first controller 1610 and perform the feedback control in response to the output signal of the fifth force sensor 13.

The seventh force sensor 23 provided in the second brake 120 may be electrically connected or communication-connected to the second brake 120. For example, the seventh force sensor 23 may be electrically connected or communication-connected to the controller 122 of the second brake 120.

The controller 122 of the second brake 120 may perform the braking control or braking release control on the second brake 120 in response to the control signal from the second controller 1620 and perform the feedback control in response to the output signal of the seventh force sensor 23.

The first force sensor 11 provided in the third brake 130 may be electrically connected or communication-connected to the third brake 130. For example, the first force sensor 11 may be electrically connected or communication-connected to the controller 132 of the third brake 130.

The controller 132 of the third brake 130 may perform the braking control or braking release control on the third brake 130 in response to the control signal from the second controller 1620 and perform the feedback control in response to the output signal of the first force sensor 11.

The third force sensor 21 provided in the fourth brake 140 may be electrically connected or communication-connected to the fourth brake 140. For example, the third force sensor 21 may be electrically connected or communication-connected to the controller 142 of the fourth brake 140.

The controller 142 may perform the braking control or braking release control on the fourth brake 140 in response to the control signal from the first controller 1610 and perform the feedback control in response to the output signal of the third force sensor 21.

The third brake 130 and the fourth brake 140 may be connected directly to each other (electrically connected to each other or communication-connected to each other), i.e., the controller 132 of the third brake 130 and the controller 142 of the fourth brake 140 may be connected directly to each other.

Therefore, when the first force sensor 11 fails, the controller 132 of the third brake 130 may control the third brake 130 in response to an output signal from a third force sensor 13. For example, when the first force sensor 11 fails, the controller 132 of the third brake 130 may receive the output signal of the third force sensor 13 from the controller 142 of the fourth brake 140.

In addition, when the third force sensor 13 fails, the controller 142 of the fourth brake 140 may control the fourth brake 140 in response to the output signal from the first force sensor 11. For example, when the third force sensor 13 fails, the controller 142 of the fourth brake 140 may receive the output signal of the first force sensor 11 from the controller 132 of the third brake 130.

The first battery 1510 may supply power to the first controller 1610 through the power line. Additionally, the first battery 1510 may supply power to the pedal displacement sensor 30 and the pressure sensor 40 via the first controller 1610.

The second battery 1520 may supply power to the second controller 1620 through the power line. Additionally, the second battery 1520 may supply power to the pedal displacement sensor 30 and the pressure sensor 40 via the second controller 1620.

The first battery 1510 may supply power to the first brake 110, i.e., the controller 112 of the first brake 110 via the first controller 1610. In addition, the second battery 1520 may supply power to the second brake 120, i.e., the controller 122 of the second brake 120 via the second controller 1620.

The fifth force sensor 13 provided in the first brake 110 may receive power from the first battery 1510 through the power line via the first brake 110.

The seventh force sensor 23 provided in the second brake 120 may receive power from the second battery 1520 through the power line via the second brake 120.

The first battery 1510 may supply power to the fourth controller 140 through the power line.

The third force sensor 21 provided in the fourth brake 140 may receive power from the first battery 1510 through the power line via the fourth brake 140.

The second battery 1520 may supply power to the third controller 130 through the power line.

The first force sensor 11 provided in the third brake 130 may receive power from the second battery 1520 through the power line via the third brake 130.

The pedal displacement sensor 30 and the pedal force sensor 35 may be electrically connected or communication-connected to the first and second controllers 1610 and 1620. The first controller 1610 may output the signal for performing the braking control or braking release control on the first brake 110 in response to the output signals of the pedal displacement sensor 30 and/or the pedal force sensor 35. The second controller 1620 may output the signal for performing the braking control or braking release control on the second brake 120 in response to the output signals of the pedal displacement sensor 30 and/or the pedal force sensor 35. The first controller 1610 may output the signal for performing the braking control or braking release control on the fourth brake 140 in response to the output signals of the pedal displacement sensor 30 and/or the pedal force sensor 35. The second controller 1620 may output the signal for performing the braking control or braking release control on the third brake 130 in response to the output signals of the pedal displacement sensor 30 and/or the pedal force sensor 35.

For example, the pedal displacement sensor 30 and the pedal force sensor 35 may serve as redundancy from each other, such that when any one sensor fails, the other sensor may provide a backup replacement for the function.

According to the above-mentioned configuration of the brake system 1-8 in FIG. 9, it can be seen that the power sources of the first controller 1610, the first brake 110, and the fourth brake 140 are connected, and the power sources of the second controller 1620, the second brake 120, and the third brake 130 are connected. According to the above-mentioned cross-connection of the power sources, the brake system 1 may stably perform the braking control even in a situation in which any one of the first battery 1510 and the second battery 1520 fails.

For example, when the first battery 1510 or the second battery 1520 fails, the brake system 1-7 may stably perform the braking control on the basis of the braking control of the two brakes having the cross-connection relationship by means of the battery, which operates normally, and the controller, which receives power from the corresponding battery.

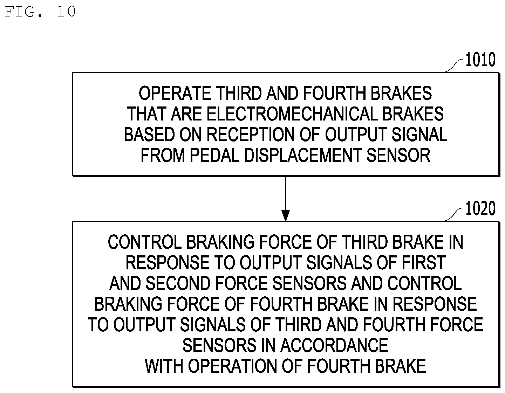

FIG. 10 is a flowchart of the operation of controlling the brake system 1 (and/or the controller 160) according to the embodiment.

With reference to FIG. 10, the brake system 1 may operate the third and fourth brakes 130 and 140, which are electromechanical brakes, based on the reception of the output signal from the pedal displacement sensor 30 of the brake pedal 31 for a vehicle (1010).

The brake system 1 may control the braking force of the third brake 130 in response to the output signals of the first and second force sensors 11 and 12 in accordance with the operation of the third brake 130 and control the braking force of the fourth brake 140 in response to the output signals of the third and fourth force sensors 21 and 22 in accordance with the operation of the fourth brake 140 (1020).

For example, the fourth brake 140, which is an electromechanical brake, may be operated in response to the control signal of the first controller 1610 that receives power from the first power supply device 1510. For example, the first controller 1610 may output the control signal to the controller 142 of the fourth brake 140.

In addition, the third brake 130, which is an electromechanical brake, may be operated in response to the control signal of the second controller 1620 that receives power from the second power supply device 1520. For example, the second controller 1620 may output the control signal to the controller 132 of the third brake 130.

The first controller 1610 may be electrically connected or communication-connected to the third and fourth brakes 130 and 140, and the second controller 1620 may be electrically connected or communication-connected to the third and fourth brakes 130 and 140.

Therefore, when the first controller 1610 or the first power supply device 1510 fails, the third and fourth brakes 130 and 140 may be operated in response to the control signal of the second controller 1620. In addition, when the second controller 1620 or the second power supply device 1520 fails, the third and fourth brakes 130 and 140 may be operated in response to the control signal of the first controller 1610.

Meanwhile, in addition to the above-mentioned embodiment in FIG. 10, when any one of the first and second force sensors 11 and 12 fails, i.e., is inoperable, the brake system 1 may control the third brake 130 in response to the output signal of the remaining force sensor. In addition, when any one of the third and fourth force sensors 21 and 22 is inoperable, the brake system 1 may operate the fourth brake 140 in response to the output signal of the remaining force sensor.

The brake system 1 and the method of controlling the same according to the above-mentioned embodiments may provide a new structure capable of integrating the hydraulic brake and the electromechanical brake and ensuring the redundancy.

In addition, the brake system 1 and the method of controlling the same according to the above-mentioned embodiments may improve the function of controlling the stability of the brake system by means of the configurations of the dual force sensor and the dual power supply device.

Meanwhile, the disclosed embodiments may be implemented in the form of a recording medium that stores instructions executable by a computer. The instructions may be stored in the form of program codes, and when executed by a processor, the instructions may perform operations of the disclosed embodiments by generating a program module. The recording medium may be implemented as a computer-readable recording medium.

The computer-readable recording medium may include all kinds of recording media storing instructions that can be interpreted by a computer. For example, the computer-readable recording medium may be Read Only Memory (ROM), Random Access Memory (RAM), a magnetic tape, a magnetic disc, flash memory, an optical data storage device, etc.

A machine-readable storage medium may be provided in the form of a non-transitory storage medium, wherein the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium.

So far, the disclosed embodiments have been described with reference to the accompanying drawings. It will be understood by one of ordinary skill in the technical art to which the disclosure belongs that the disclosure can be embodied in different forms from the disclosed embodiments without changing the technical spirit and essential features of the disclosure. Thus, it should be understood that the disclosed embodiments described above are merely for illustrative purposes and not for limitation purposes in all aspects.

## Claims

1. A brake system comprising:
an electromechanical brake associated with a wheel of a vehicle;
first and second force sensors configured to detect a clamping force of the electromechanical brake;
an electromechanical brake controller configured to control the electromechanical brake in response to an output signal of at least one of the first and second force sensors;
one or more controllers configured to output at least one control signal for controlling the electromechanical brake to the electromechanical brake controller; and
first and second power supplies configured to supply power to at least one of the one or more controllers or the electromechanical brake controller,
wherein the first and second force sensors are connected to the first and second power supplies through the electromechanical brake controller to receive the power from at least one of the first and second power supplies through the electromechanical brake controller.

2. The brake system of claim 1, wherein the electromechanical brake controller is configured to control the electromechanical brake based on comparison between the output signal of the first force sensor and the output signal of the second force sensor.

3. The brake system of claim 1, wherein the electromechanical brake controller is configured to:
control the electromechanical brake in response to the output signal of the first force sensor, and
when the first force sensor is inoperable, control the electromechanical brake in response to the output signal of the second force sensor.

4. The brake system of claim 1, wherein:
the wheel associated with the electromechanical brake is a first rear wheel,
the brake system further comprises an other electromechanical brake associated with a second rear wheel, and an other electromechanical brake controller configured to control the other electromechanical brake.

5. The brake system of claim 4, wherein:
the first power supply is configured to supply the power to the one or more controllers, the electromechanical brake controller, and the other electromechanical brake controller, and
the second power supply is configured to supply the power to the electromechanical brake controller and the other electromechanical brake controller.

6. The brake system of claim 4, wherein the one or more controllers comprise:
a first controller configured to output a first control signal for controlling the other electromechanical brake to the other electromechanical brake controller, and
a second controller configured to output a second control signal for controlling the electromechanical brake to the electromechanical brake controller.

7. The brake system of claim 6, wherein:
the first power supply is configured to supply the power to the first controller, the electromechanical brake controller, and the other electromechanical brake controller, and
the second power supply is configured to supply the power to the second controller, the electromechanical brake controller, and the other electromechanical brake.

8. The brake system of claim 6, wherein:
the first power supply is configured to supply the power to the first controller and the other electromechanical brake controller, and
the second power supply is configured to supply the power to the second controller and the electromechanical brake controller.

9. The brake system of claim 1, wherein:
the wheel associated with the electromechanical brake is a rear wheel,
the brake system further comprises:
a hydraulic brake associated with a front wheel of the vehicle; and
a hydraulic pressure supply configured to supply hydraulic pressure to generate a braking force in the hydraulic brake,
the one or more controllers configured to output the at least one control signal for controlling the electromechanical brake to the electromechanical brake controller and output another control signal for supplying the hydraulic pressure to the hydraulic pressure supply in response to an output signal of at least one of a pedal displacement sensor of a brake pedal or a pressure sensor configured to sense the hydraulic pressure supplied by the hydraulic pressure supply.

10. The brake system of claim 9, wherein the pedal displacement sensor and the pressure sensor are connected to the first and second power supplies through the one or more controllers to receive the power from the first and/or second power supplies through the one or more controllers.

11. The brake system of claim 1, wherein:
the wheel associated with the electromechanical brake is a rear wheel,
the brake system further comprises:
an other electromechanical brake associated with a front wheel of the vehicle;
two other force sensors configured to detect a clamping force of the other electromechanical brake associated with the front wheel; and
an other electromechanical brake controller configured to control the other electromechanical brake associated with the front wheel in response to an output signal of at least one of the two other force sensors, and
the one or more controllers are configured to output the at least one control signal for controlling the electromechanical brake associated with the rear wheel to the electromechanical brake controller associated with the rear wheel and output another control signal for controlling the other electromechanical brake associated with the front wheel to the other electromechanical brake controller associated with the front wheel in response to an output signal of at least one of a pedal displacement sensor of a brake pedal or a pedal force sensor of the brake pedal.

12. The brake system of claim 11, wherein the pedal displacement sensor and the pedal force sensor are connected to the first and second power supplies through the one or more controllers to receive power from the first and/or second power supplies through the one or more controllers.

13. A method of controlling a brake system comprising electromechanical brakes associated with rear wheels of a vehicle, and first and second force sensors configured to receive power from at least one of first and second power supplies through an electromechanical brake controller and detect a clamping force of at least one of the electromechanical brakes, the method comprising:
controlling the electromechanical brakes in response to an output signal of a pedal displacement sensor of a brake pedal; and
controlling braking force of the electromechanical brakes in response to an output signal of at least one of the first and second force sensors.

14. The method of claim 13, wherein:
the electromechanical brakes comprise:
a first electromechanical brake associated with a first rear wheel of the rear wheels; and
a second electromechanical brake associated with a second rear wheel of the rear wheels, and
the controlling of the electromechanical brakes comprises:
controlling the second electromechanical brake in response to a first control signal of a first controller configured to receive the power from the first power supply; and
controlling the first electromechanical brake in response to a second control signal of a second controller configured to receive the power from the second power supply.

15. The method of claim 14, further comprising:
when the first controller or the first power supply fails or is inoperable, controlling the first electromechanical brake and the second electromechanical brake based on the second control signal of the second controller; and
when the second controller or the second power supply fails or inoperable, controlling the first electromechanical brake and the second electromechanical brake based on the first control signal of the first controller.

## Amended claims

### Amended claims in accordance with Rule 137(2) EPC.

1. A brake system (1, 1-1, 1-2, 1-3, 1-5, 1-6, 1-7) comprising:
an electromechanical brake (130) associated with a wheel (W3) of a vehicle;
first and second force sensors (11, 12) configured to detect a clamping force of the electromechanical brake (130);
an electromechanical brake controller (132) configured to control the electromechanical brake (130) in response to an output signal of at least one of the first and second force sensors (11, 12);
one or more controllers (160) configured to output at least one control signal for controlling the electromechanical brake (130) to the electromechanical brake controller (132); and
first and second power supplies (1510, 1520) configured to supply power to at least one of the one or more controllers (160) or the electromechanical brake controller (132),
wherein the first and second force sensors (11, 12) are connected to the first and second power supplies (1510, 1520) through the electromechanical brake controller (132) to receive the power from at least one of the first and second power supplies (1510, 1520) through the electromechanical brake controller (132).

2. The brake system (1, 1-1, 1-2, 1-3, 1-5, 1-6, 1-7) of claim 1, wherein the electromechanical brake controller (132) is configured to control the electromechanical brake (130) based on comparison between the output signal of the first force sensor (11) and the output signal of the second force sensor (12).

3. The brake system (1, 1-1, 1-2, 1-3, 1-5, 1-6, 1-7) of claim 1, wherein the electromechanical brake controller (132) is configured to:
control the electromechanical brake (130) in response to the output signal of the first force sensor (11), and
when the first force sensor (11) is inoperable, control the electromechanical brake (130) in response to the output signal of the second force sensor (12).

4. The brake system (1, 1-1, 1-2, 1-3, 1-5, 1-6, 1-7) of claim 1, wherein:
the wheel (W3) associated with the electromechanical brake (130) is a first rear wheel (W3),
the brake system (1) further comprises an other electromechanical brake (140) associated with a second rear wheel (W4), and an other electromechanical brake controller (142) configured to control the other electromechanical brake (140).

5. The brake system (1, 1-1, 1-2) of claim 4, wherein:
the first power supply (1510) is configured to supply the power to the one or more controllers (160), the electromechanical brake controller (132), and the other electromechanical brake controller (142), and
the second power supply (1520) is configured to supply the power to the electromechanical brake controller (132) and the other electromechanical brake controller (142).

6. The brake system (1, 1-2, 1-3, 1-6, 1-7) of claim 4, wherein the one or more controllers (160) comprise:
a first controller (1610) configured to output a first control signal for controlling the other electromechanical brake (140) to the other electromechanical brake controller (142), and
a second controller (1620) configured to output a second control signal for controlling the electromechanical brake (130) to the electromechanical brake controller (132).

7. The brake system (1, 1-2, 1-6) of claim 6, wherein:
the first power supply (1510) is configured to supply the power to the first controller (1610), the electromechanical brake controller (132), and the other electromechanical brake controller (142), and
the second power supply (1520) is configured to supply the power to the second controller (1620), the electromechanical brake controller (132), and the other electromechanical brake controller (142).

8. The brake system (1, 1-2, 1-3, 1-6, 1-7) of claim 6, wherein:
the first power supply (1510) is configured to supply the power to the first controller (1610) and the other electromechanical brake controller (142), and
the second power supply (1520) is configured to supply the power to the second controller (1620) and the electromechanical brake controller (132).

9. The brake system (1-1, 1-2, 1-3, 1-4) of claim 1, wherein:
the wheel (W3) associated with the electromechanical brake (130) is a rear wheel,
the brake system (1-1, 1-2, 1-3, 1-4) further comprises:
a hydraulic brake (110, 120) associated with a front wheel (W1, W2) of the vehicle; and
a hydraulic pressure supply (190) configured to supply hydraulic pressure to generate a braking force in the hydraulic brake (110, 120),
the one or more controllers (160) configured to output the at least one control signal for controlling the electromechanical brake (130) to the electromechanical brake controller (132) and output another control signal for supplying the hydraulic pressure to the hydraulic pressure supply (190) in response to an output signal of at least one of a pedal displacement sensor (30) of a brake pedal (31) or a pressure sensor (40) configured to sense the hydraulic pressure supplied by the hydraulic pressure supply.

10. The brake system (1-1, 1-2, 1-3, 1-4) of claim 9, wherein the pedal displacement sensor (30) and the pressure sensor (40) are connected to the first and second power supplies (1510, 1520) through the one or more controllers (160) to receive the power from the first and/or second power supplies (1510, 1520) through the one or more controllers (160).

11. The brake system (1-5, 1-6, 1-7) of claim 1, wherein:
the wheel (W3) associated with the electromechanical brake (130) is a rear wheel,
the brake system (1) further comprises:
an other electromechanical brake (110, 120) associated with a front wheel (W1, W2) of the vehicle;
two other force sensors (13, 14, 23, 24) configured to detect a clamping force of the other electromechanical brake (110, 120) associated with the front wheel (W1, W2); and
an other electromechanical brake controller (112, 122) configured to control the other electromechanical brake (110, 120) associated with the front wheel (W1, W2) in response to an output signal of at least one of the two other force sensors (13, 14, 23, 24), and
the one or more controllers (160) are configured to output the at least one control signal for controlling the electromechanical brake (130) associated with the rear wheel (W3) to the electromechanical brake controller (132) associated with the rear wheel (W3) and output another control signal for controlling the other electromechanical brake (110, 120) associated with the front wheel (W1, W2) to the other electromechanical brake controller (112, 122) associated with the front wheel (W1, W2) in response to an output signal of at least one of a pedal displacement sensor (30) of a brake pedal (31) or a pedal force sensor (35) of the brake pedal (31).

12. The brake system (1-5, 1-6, 1-7) of claim 11, wherein the pedal displacement sensor (30) and the pedal force sensor (35) are connected to the first and second power supplies (1510, 1520) through the one or more controllers (160) to receive power from the first and/or second power supplies (1510, 1520) through the one or more controllers (160).

13. A method of controlling a brake system (1) comprising electromechanical brakes (130, 140) associated with rear wheels (W3, W4) of a vehicle, and first and second force sensors (11, 12, 21, 22) configured to receive power from at least one of first and second power supplies (1510, 1520) through an electromechanical brake controller (132) and detect a clamping force of at least one of the electromechanical brakes (130, 140), the method comprising:
controlling the electromechanical brakes (130, 140) in response to an output signal of a pedal displacement sensor (30) of a brake pedal (31); and
controlling braking force of the electromechanical brakes (130, 140) in response to an output signal of at least one of the first and second force sensors (11, 12, 21, 22).

14. The method of claim 13, wherein:
the electromechanical brakes (130, 140) comprise:
a first electromechanical brake (130) associated with a first rear wheel (W3) of the rear wheels (W3, W4); and
a second electromechanical brake (140) associated with a second rear wheel (W4) of the rear wheels (W3, W4), and
the controlling of the electromechanical brakes (130, 140) comprises:
controlling the second electromechanical brake (140) in response to a first control signal of a first controller (1610) configured to receive the power from the first power supply (1510); and
controlling the first electromechanical brake (130) in response to a second control signal of a second controller (1620) configured to receive the power from the second power supply (1520).

15. The method of claim 14, further comprising:
when the first controller (1610) or the first power supply (1510) fails or is inoperable, controlling the first electromechanical brake (130) and the second electromechanical brake (140) based on the second control signal of the second controller (1620); and
when the second controller (1620) or the second power supply (1520) fails or inoperable, controlling the first electromechanical brake (130) and the second electromechanical brake (140) based on the first control signal of the first controller (1610).
